# EUROPÄISCHE PATENTSCHRIFT

(11) **EP 4 341 199 B1**
(45) Veröffentlichungstag und Bekanntmachung des Hinweises auf die Patenterteilung: **25.12.2024**
(21) Anmeldenummer: 22729645.6
(22) Anmeldetag: 19.05.2022
(51) Int. Cl.: B67D 7/02, B67D 7/32, B67D 7/38, B67D 7/82, F16L 53/38, F17C 5/00, F17C 13/10

(54) **ZAPFANLAGE ZUR ABGABE EINES BETRIEBSSTOFFS**
TAPPING SYSTEM FOR DISPENSING AN OPERATING MATERIAL
ROBINET DE DÉBIT PERMETTANT DE DISTRIBUER UN COMBUSTIBLE

(30) Priorität: 21.05.2021 EP 21175295
(43) Veröffentlichungstag der Anmeldung: 27.03.2024
(73) Patentinhaber: ELAFLEX HIBY GmbH & Co. KG, 22501 Hamburg (DE)
(72) Erfinder: KUNTER, Stefan, 22525 Hamburg (DE); SCHÖRCK, Torben, 22525 Hamburg (DE); DUUS, Jörg, 22525 Hamburg (DE)
(74) Vertreter: Glawe, Delfs, Moll
(86) Internationale Anmeldenummer: PCT/EP2022/063566
(87) Internationale Veröffentlichungsnummer: WO 2022/243428

(56) Entgegenhaltungen:
- EP-A1- 3 050 842
- DE-A1- 102011 014 520
- US-A- 5 381 511
- US-A1- 2005 063 689
- US-A1- 2005 274 713
- US-A1- 2016 060 096
- US-A1- 2018 124 876
- US-B2- 9 574 918

## Beschreibung

Gegenstand der vorliegenden Anmeldung ist eine Anordnung umfassend einen flexiblen Schlauch zur Durchleitung eines Mediums und eine Steuereinheit zur Abgabe einer elektrischen Leistung.

Modernen Verbrennungsmotoren können neben dem Kraftstoff zusätzliche Betriebsstoffe zugeführt werden, um die Emission schädlicher Absage zu verringern. Insbesondere kommt bei modernen Dieselmotoren die sogenannte SCR-Technologie zum Einsatz, bei der mittels einer wässrigen Harnstofflösung, die auch unter dem Namen "Adblue^{®}" bekannt ist, die Emission von Stickoxiden verringert wird. Die zusätzlichen Betriebsstoffe werden während des Betriebs verbraucht, so dass in den Fahrzeugen vorhandene Betriebsstoff-Tanks regelmäßig wieder befüllt werden müssen. An Tankstellen finden sich dazu üblicherweise separate Betriebsstoff-Zapfsäulen.

Da der Betriebsstoff Adblue^{®} bereits bei Temperaturen von -11°C gefriert, ist es aus dem Stand der Technik grundsätzlich bekannt, Heizeinrichtungen zu verwenden, die bei kalten Umgebungstemperaturen ein Gefrieren des Betriebsstoffs verhindern sollen. Beispielsweise wird in der DE 10 2015 115 922 A1 vorgeschlagen, den Innenraum des Zapfsäulengehäuses, in dem ein Betriebsstofftank angeordnet ist, zu beheizen und zudem den Zapfschlauch innerhalb des Gehäuses zu lagern, während er nicht in Verwendung ist. Bekannt ist es darüber hinaus aus der US 2016/0280532 A1 oder der WO 2014 113 277 A1, im Zapfschlauch zusätzliche Leitungssysteme vorzusehen, durch die ein erwärmtes Fluid geleitet wird, um den Schlauch zu erwärmen. In der WO 2012/015685 wird vorgeschlagen, den auszubringenden Betriebsstoff selbst mittels eines Temperiersystems ausreichend zu erwärmen und mit Hilfe eines Kreislaufsystems ein Durchfließen des Zapfschlauchs zu ermöglichen, selbst wenn dieser nicht im Einsatz ist. Eine Zapfanlage zur Ausbringung einer wässrigen Harnstofflösung ist auch aus den Dokument US 2016/060096 A1 bekannt. Die Dokumente US 2005/0063689 A1, US 2018/0124876 A1, US 5,381,511 und US 2005/0274713 A1 offenbaren beheizbare Flüssigkeitsleitungen. EP 3 050 842 A1 offenbart eine Vorrichtung zur Einspritzung eines Additivs. DE 10 2011 014 520 A1 betrifft eine Schlauchtrommelanordnung mit einem auf- und abwickelbaren Schlauch und einem darin befindlichen Heizmittel.

Nachteilig an den vorbekannten Zapfanlagen ist, dass diese hinsichtlich Wartung und Betrieb einen hohen Aufwand erzeugen und zudem die Benutzung für den Anwender kompliziert sein kann. Darüber hinaus haben vorbekannte Zapfanlagen oftmals das Problem, dass sie den Anforderungen zum Betrieb in einer Zone 1 oder 2 gemäß der ATEX-Betriebsrichtlinie 1999/92/EG nicht genügen und daher aus Explosionsschutzgründen nicht benachbart zu Kraftstoffzapfsäulen aufgestellt oder innerhalb einer Mulidispenser-Zapfsäule mit zumindest einer Kraftstoffzapfstelle installiert werden dürfen.

Vor diesem Hintergrund ist es die Aufgabe der vorliegenden Erfindung eine Anordnung umfassend einen flexiblen Schlauch zur Durchleitung eines Mediums bereitzustellen, die die oben genannten Probleme zumindest teilweise vermeidet.

Demnach betrifft die vorliegende Erfindung eine Anordnung gemäß dem Anspruch 1. Vorteilhafte Ausführungsformen sind in den Unteransprüchen beschrieben.

Zunächst werden einige im Rahmen der vorliegenden Offenbarung verwendete Begriffe erläutert. Eine Zone 0 gemäß der ATEX-Betriebsrichtlinie 1999/92/EG ist ein Bereich, in dem eine explosionsfähige Atmosphäre als Gemisch aus Luft und brennbaren Gasen, Dämpfen oder Nebeln ständig, über lange Zeiträume oder häufig vorhanden ist. Der Begriff Zone 1 gemäß der ATEX-Betriebsrichtlinie 1999/92/EG bezeichnet einen Bereich, in dem sich bei Normalbetrieb gelegentlich eine explosionsfähige Atmosphäre als Gemisch aus Luft und brennbaren Gasen, Dämpfen oder Nebeln bilden kann. Eine Zone 2 gemäß der ATEX-Betriebsrichtlinie 1999/92/EG ist ein Bereich, in dem bei Normalbetrieb eine explosionsfähige Atmosphäre als Gemisch aus Luft und brennbaren Gasen, Dämpfen oder Nebeln normalerweise nicht oder aber nur kurzzeitig auftritt. Diese Definitionen entsprechen den Definitionen im Anhang I, Nummer 2 der Richtlinie 1999/92/EG.

Der Begriff "explosionsfähige Atmosphäre" wird entsprechend der Richtlinie 2014/34/EU, Artikel 2, Nr. 4 verwendet und bezeichnet ein Gemisch aus Luft und brennbaren Gasen, Dämpfen, Nebeln oder Stäuben unter atmosphärischen Bedingungen, in dem sich der Verbrennungsvorgang nach erfolgter Entzündung auf das gesamte unverbrannte Gemisch überträgt.

Wenn eine Vorrichtung im Rahmen der vorliegenden Offenbarung dazu eingerichtet ist, in einer Zone 0 gemäß der ATEX-Betriebsrichtlinie 1999/92/EG (nachfolgend auch Atex-Zone 0) betrieben zu werden ist dies gleichbedeutend damit, dass die Vorrichtung die Anforderungen der Richtlinie 2014/34/EU erfüllt, welche an die Gerätegruppe II, Gerätekategorie 1 gestellt werden (siehe Anhang I, Ziffer 2 a) der Richtlinie 2014/34/EU). Wenn eine Vorrichtung im Rahmen der vorliegenden Offenbarung dazu eingerichtet ist, in einer Zone 1 gemäß der ATEX-Betriebsrichtlinie 1999/92/EG (nachfolgend Atex-Zone 1) betrieben zu werden ist dies gleichbedeutend damit, dass die Vorrichtung die Anforderungen der Richtlinie 2014/34/EU erfüllt, welche an die Gerätegruppe II, Gerätekategorie 2 gestellt werden (siehe Anhang I, Ziffer 2 b) der Richtlinie 2014/34/EU). Wenn eine Vorrichtung im Rahmen der vorliegenden Offenbarung dazu eingerichtet ist, in einer Zone 2 gemäß der ATEX-Betriebsrichtlinie 1999/92/EG (nachfolgend auch Atex-Zone 2) betrieben zu werden ist dies gleichbedeutend damit, dass die Vorrichtung die Anforderungen der Richtlinie 2014/34/EU erfüllt, welche an die Gerätegruppe II, Gerätekategorie 3 gestellt werden (siehe Anhang I, Ziffer 2 c) der Richtlinie 2014/34/EU) .

Bei einer Kraftstoffzapfsäule ist die räumliche Position der Zone 0, Zone 1 und Zone 2 sowie die Anforderungen an Geräte, die in diesen Zonen betrieben werden, durch die ATEX-Betriebsrichtlinien 1999/92/EG und 2014/34/EU eindeutig festgelegt. Wenn der Schlauch (nachfolgend auch als Zapfschlauch bezeichnet) und das Zapfventil einer Zapfanlage dazu eingerichtet sind, in einer der genannten Zonen gemäß der ATEX-Betriebsrichtlinie 1999/92/EG betrieben zu werden, bedeutet dies, dass die Zapfanlage selbst dann richtlinienkonform neben einer Kraftstoffzapfsäule oder auch integriert in einer Multidispenser-Zapfanlage betrieben werden kann, wenn der Zapfschlauch und/oder das Zapfventil während der Benutzung der Anlage (beispielsweise während eines Tankvorgangs) in diese Zone der Kraftstoffzapfsäule bzw. der Multidispenser-Zapfanlage bewegt werden können. Da die Anforderungen zum Betrieb in einer Zone 0 strenger sind als die Anforderungen zum Betrieb in einer Zone 1 und diese wiederum strenger als die Anforderungen zum Betrieb in einer Zone 2, können zum Betrieb in einer höherrangigen Zone eingerichtete Vorrichtungen auch richtlinienkonform in einer niederrangigen Zone betrieben werden.

Wenn der Bauraum der Zapfanlage zonenfrei ausgebildet ist, bedeutet dies, dass der Bauraum selbst dann frei von einer Atex-Zone ist, wenn die Zapfanlage so positioniert ist, dass sich der Zapfschlauch und/oder das Zapfventil in einer Atex-Zone (Zone 0, 1, oder 2) befinden oder in diese Zone bewegt werden können. Der Bauraum kann insoweit zur Abschirmung gegenüber einer solchen Zone ausgebildet sein. Beispielsweise kann der Bauraum in ein Gehäuse der Zapfanlage integriert sein, wobei das Gehäuse durch konstruktive Maßnahmen von der Umgebung abgeschirmt sein kann, so dass das Eindringen einer explosionsfähigen Atmosphäre in das Gehäuse verhindert oder verringert wird und/oder durch ausreichende Lüftungsmaßnahmen ggf. eindringende explosive Dämpfe derart verdünnt werden, dass sich innerhalb des Gehäuses keine explosionsfähige Atmosphäre ausbilden kann. Möglich ist auch, dass innerhalb des Gehäuses ein zonenfreies Teilgehäuse vorhanden ist, in dem der Bauraum angeordnet ist. In diesem Fall muss nicht das Gesamte Gehäuse der Zapfanlage zonenfrei ausgebildet sein.

Alternativ kann der Bauraum auch in einem Abstand zum Zapfschlauch und/oder Zapfventil positioniert sein, so dass eine im Bereich des Zapfschlauchs und/oder Zapfventils befindliche Zone bereits aufgrund des Abstandes keinen Einfluss auf den Bauraum hat. Der Bauraum kann beispielsweise in einem neben der Zapfanlage befindlichen Tankstellengebäude oder auch unterirdisch angeordnet sein, wobei der Heizdraht und die Steuereinheit in diesem Fall durch ein Kabel zur Übertragung der elektrischen Leistung miteinander verbunden sein können.

Der Heizdraht besteht aus einem elektrisch leitfähigem Material, das sich nach dem Stromwärmegesetz erwärmt, wenn der Heizdraht von einem elektrischen Strom durchflossen wird. Ein elektrischer Widerstand des Heizdrahts kann beispielsweise im Bereich zwischen 0,01 und 2 Ohm/m, vorzugsweise zwischen 0,05 und 1 Ohm/m, weiter vorzugsweise zwischen 0,1 und 0,5 Ohm/m liegen. Der Heizdraht kann beispielsweise eine Widerstandslegierung nach DIN 17471 (beispielsweise eine CrFeNi-Legierung oder eine CrFeAl-Legierung) aufweisen oder daraus bestehen oder ein halbleitendes Material (beispielsweise Siliziumkarbid, Molybdändisilicid oder Graphit) aufweisen oder daraus bestehen. Vorzugsweise weist der Heizdraht in Bezug auf seinen elektrischen Widerstand einen Temperaturkoeffizienten auf, welcher nur leicht positiv ist. Beispielsweise kann der Temperaturkoeffizient bei weniger als 10%/K, vorzugsweise bei weniger als 5%/K, weiter vorzugsweise bei weniger als 1%/K liegen. Der Temperaturkoeffizient kann alternativ auch negativ sein, es kann sich also um einen Heißleiter handeln.

Wenn der Heizdraht in der Schlauchwand eingebettet ist, bedeutet dies, dass der Heizdraht vollständig vom flexiblen Wandmaterial des Zapfschlauchs umgeben ist. Der Heizdraht kann beispielsweise auf einen vorgefertigten (beispielsweise durch Extrusion hergestellten) Innenschlauch aufgewickelt werden, so dass er fest auf dem Innenschlauch aufliegt. Anschließend kann beispielsweise eine thermoplastische Kunststoffplatte um den Innenschlauch und den darauf aufgewickelten Heizdraht umfänglich herumgelegt werden, wobei nachfolgend durch Vulkanisation eine Verbindung zwischen dem Innenschlauch und der Kunststoffplatte erzeugt wird, die dazu führt, dass der Heizdraht vollständig vom Kunststoffmaterial des Innenschlauchs und/oder der Kunststoffplatte umgeben ist. Das so erhaltene Schlauch-Halbzeug kann anschließend mittels Extrusion mit einem Außenschlauch umgeben werden. Zur Erhöhung der Stabilität können Verstärkungsgeflechte zwischen Innenschlauch und Kunststoffplatte und/oder zwischen Kunststoffplatte und Außenschlauch eingebracht werden. Der Heizdraht kann auch auf andere, aus dem Stand der Technik grundsätzlich bekannte Weise in den Zapfschlauch eingebettet werden. Der Schlauch mit dem darin eingebetteten Heizdraht wird nachfolgend auch als Heizschlauch bezeichnet. Der Heizdraht kann dazu eingerichtet sein, bezogen auf die Länge des Zapfschlauchs eine Heizleistung abzugeben, die zwischen 5 und 200 W/m, vorzugsweise zwischen 10 und 100 W/m, weiter vorzugsweise zwischen 20 und 70 W/m liegt.

Es ist bevorzugt, dass der Zapfschlauch das Zapfventil unmittelbar mit der Fördereinrichtung verbindet. Es kann dann sichergestellt werden, dass der Betriebsstoff direkt nach dem Austritt aus der Fördereinrichtung innerhalb des Zapfschlauchs erwärmt wird. Möglich ist grundsätzlich auch, dass der Zapfschlauch mit einer am Gehäuse oder innerhalb des Gehäuses der Zapfanlage befindlichen Anschlusskupplung verbunden ist, die wiederum mittels einer Fluidleitung mit der Fördereinrichtung verbunden ist.

Im Rahmen der vorliegenden Offenbarung wurde erkannt, dass durch die beiden Maßnahmen, den Heizdraht in den Zapfschlauch einzubetten und die Steuereinheit innerhalb des zonenfreien Bauraums anzuordnen, die Eignung der Anlage zum Betrieb im Umfeld einer Atex-Zone auf besonders wirtschaftliche und sichere Weise realisiert werden kann. Insbesondere führt die optionale Positionierung der Steuereinheit innerhalb des zonenfreien Bauraums dazu, dass sich die Steuereinheit selbst dann außerhalb einer Atex-Zone angeordnet ist, wenn sich die Zapfanlage in unmittelbarer Umgebung oder innerhalb einer solchen Atex-Zone befindet. Es ist daher nicht erforderlich, dass die Steuereinheit selbst zum Betrieb in einer Atex-Zone ausgestaltet und zugelassen ist.

Darüber hinaus werden durch das Einbetten des Heizdrahts innerhalb der Wand des Zapfschlauchs auf wirtschaftliche und ausfallsichere Weise weitere Vorteile erzielt. Zum einen wird der Heizdraht vor mechanischen Einflüssen (wie beispielsweise Stößen) während des Betriebs der Anlage geschützt. Auf diese Weise können mechanische Schäden am Heizdraht, die bei einer Beaufschlagung des Heizdrahts mit elektrischer Leistung grundsätzlich mit der Gefahr einer Funkenentstehung einhergehen, sicher vermieden werden. Zum anderen wird der Heizdraht durch das Einbetten von einer möglicherweise in der Umgebung vorhandenen explosionsfähigen Atmosphäre isoliert. Selbst wenn es zu mechanischen Schäden am Heizdraht (beispielsweise zu einem Bruch oder Kurzschluss) kommt, besteht noch immer ein hohes Maß an Sicherheit, da die Gefahr eines Kontakts zur potenziell explosionsfähigen Umgebung durch das Einbetten des Heizdrahts im Zapfschlauch auch in diesem Fall vermieden oder zumindest deutlich verringert wird.

Es wurde darüber hinaus erkannt, dass die Zapfanlage besondere Vorteile entfaltet, wenn sie zur Ausbringung eines Gases, insbesondere eines komprimierten oder verflüssigten Gases oder Gasgemischs, verwendet wird. Der Betriebsstoff kann also auch ein solches komprimiertes oder verflüssigtes Gas aufweisen oder daraus bestehen. Beispielsweise kann der Betriebsstoff Autogas (LPG), verflüssigtes Erdgas (LNG), oder verflüssigten Wasserstoff umfassen oder daraus bestehen. Aufgrund der niedrigen Temperatur des verflüssigten Gases kommt es bei der Ausbringung zu einer starken Abkühlung des Zapfschlauchs, was dazu führen kann, dass eine Außenfläche des Zapfschlauchs aufgrund von in der Umgebung vorhandener Luftfeuchtigkeit vereist. Auch bei der Ausbringung eines komprimierten Gases kann es unter Umständen aufgrund von Entspannungskälte zu einer Vereisung kommen. Die Vereisung erschwert die Handhabbarkeit des Zapfschlauchs sowie des damit verbundenen Zapfventils erheblich und muss daher im Stand der Technik auf aufwändige Weise entfernt werden. Mit Hilfe des im Zapfschlauch eingebetteten Heizdrahts kann der Zapfschlauch auf einfache und sichere Weise erwärmt und enteist werden.

Der Zapfschlauch kann einen zur Durchleitung des Betriebsstoffs ausgebildeten Innenschlauch aufweisen. Der Innenschlauch kann von einem Außenschlauch umgeben sein, in den der Heizdraht eingebettet ist. Der Außenschlauch kann ein flexibler Kunststoffschlauch sein. Die Herstellung des Außenschlauchs mit darin eingebettetem Heizdraht kann auf die vorstehend bereits beschriebene Weise erfolgen. Der Außenschlauch mit darin eingebettetem Heizdraht wird nachfolgend auch als Heizschlauch bezeichnet.

Die Verwendung eines Innenschlauchs mit einem diesen umgebenden Heizschlauch ist beispielsweise dann von Vorteil, wenn der Betriebsstoff ein kaltes Medium ist, das eine Temperatur von deutlich unter 0°C aufweist. Deutlich unter 0°C bedeutet, dass die Temperatur kleiner als -10°C, kleiner als -30°C oder auch kleiner als -50°C sein kann. Insbesondere kann das kalte Medium eine Temperatur im Bereich zwischen -10°C und -273,15°C aufweisen. Das Medium kann insbesondere ein komprimiertes und/oder verflüssigtes Gas sein. Der Innenschlauch kann druckbeständig ausgestaltet sein in einem Druckbereich von mehr als 4 bar, vorzugsweise von mehr als 6 bar. Ein Berstdruck des Innenschlauchs kann bei mehr als 25 bar, vorzugsweise bei mehr als 30 bar, weiter vorzugsweise bei mehr als 35 bar liegen. Weiterhin kann der Innenschlauch temperaturbeständig ausgebildet sein in einem Temperaturbereich von weniger als -100°C, vorzugsweise von weniger als -140°C. Beispielsweise kann der Innenschlauch für einen Betrieb in einem Temperaturbereich zwischen -100°C und -273,15°C ausgelegt sein. Die Temperaturangaben beziehen sich dabei auf das durch den Innenschlauch transportierte Medium. Bei der Verwendung des Innenschlauchs zur Durchleitung von flüssigem Erdgas (LNG) kann der Innenschlauch für einen Betrieb in einem Temperaturbereich zwischen -100°C und -210°C ausgelegt sein. Bei der Verwendung des Innenschlauchs zur Ausbringung von flüssigem Wasserstoff kann der Innenschlauch für einen Betrieb in einem Temperaturbereich zwischen -220°C und -273,15°C ausgelegt sein. Die Temperatur- und/oder Druckbeständigkeit des Zapfschlauchs kann insbesondere definiert sein gemäß zumindest einer der in den Normen DIN EN ISO 12617, DIN EN ISO 16924, ISO 21012, oder ISO 20519 genannten Anforderungen. Der Innenschlauch kann eine Mehrzahl von Lagen bzw. Schichten und/oder ein Verbundmaterial aufweisen oder daraus bestehen. Insbesondere kann der Innenschlauch Verstärkungslagen umfassen, beispielsweise ein Geflecht oder ein Gewebe. Eine Verstärkungslage kann beispielsweise ein Metallgewebe aufweisen. Der Innenschlauch kann insbesondere als Metallwellschlauch ausgebildet sein oder einen Metallwellschlauch aufweisen.

Der Innenschlauch und der den Innenschlauch umgebende Heizschlauch können zusammen den Zapfschlauch bilden. Der Heizschlauch kann ebenfalls eine Mehrzahl von Lagen bzw. Schichten und/oder ein Verbundmaterial, insbesondere Verstärkungsfasern aufweisen. In einer bevorzugten Ausführungsform umfasst der Heizschlauch eines oder mehrere der Materialien ausgewählt aus der Gruppe Polyethylen (PE), Ethylen-Propylen-Dien-(Monomer)-Kautschuk (EPDM), Styrol-Butadien-Kautschuk (SBR), Acrylnitril-Butadien-Kautschuk (NBR), Polyvinylchlorid (PVC) und Chloropren-Kautschuk (CR).

Indem der Heizschlauch den Innenschlauch umgibt, wird der das kalte Medium (beispielsweise das komprimierte und/oder verflüssigte Gas) führende Innenschlauch zu einem gewissen Grad von der Umgebungsluft abgeschirmt, so dass in der Umgebungsluft vorhandene Luftfeuchtigkeit bereits in gewissem Maße daran gehindert wird, sich am Innenschlauch abzulagern und festzufrieren. Allerdings ist eine vollständige luftdichte Abschirmung oder Isolierung des Innenschlauchs sehr aufwändig, so dass regelmäßig trotz des Außenschlauchs eine Vereisung des Innenschlauchs stattfinden kann und zudem Kälte vom Innenschlauch auf den Außenschlauch übertragen wird. Mit Hilfe des in den Außenschlauch eingebetteten Heizdrahts kann sowohl einer Vereisung des Innenschlauchs als auch einer Vereisung des Außenschlauchs entgegengewirkt werden.

Es hat sich gezeigt, dass mit Hilfe des Heizschlauchs die Lebensdauer eines Zapfschlauchs, der als Innenschlauch beispielsweise einen Metallwellschlauch aufweist, deutlich erhöht werden kann. Durch die Vereisung solcher Metallwellschläuche wurde im Stand der Technik die Bewegbarkeit des Zapfschlauchs deutlich eingeschränkt, was während eines Tankvorgangs das Anschließen des Zapfschlauchs an einen Tankstutzen deutlich erschwert hatte. Dies hat im Stand der Technik regelmäßig dazu geführt, dass zum Anschluss des vereisten Metallwellschlauchs an einen Tankstutzen bzw. zum Lösen vom Tankstutzen vom Benutzer große Kräfte ausgeübt werden mussten, um die Eisschicht zumindest teilweise aufzubrechen und die Bewegbarkeit zu erhöhen. Naturgemäß ging dies mit einer starken mechanischen Beanspruchung des Metallwellschlauchs einher und führte oftmals zu einer frühzeitigen Zerstörung des Metallwellschlauchs. Darüber hinaus waren im Stand der Technik aufgrund der an der Außenfläche des Metallwellschlauchs herrschenden tiefen Temperaturen aufwändige Sicherheitsmaßnahmen notwendig, um zu verhindern, dass Benutzer durch Kontakt mit der Außenfläche Gefrierbrand erleiden. Durch den Zapfschlauch kann demgegenüber die Lebensdauer des Innenschlauchs deutlich erhöht und der Betrieb für den Benutzer vereinfacht und sicherer gemacht werden.

Der Heizschlauch kann unmittelbar am medienführenden Innenschlauch anliegen oder es kann ein Zwischenraum zwischen dem Innenschlauch und dem Heizschlauch bestehen. Der Zwischenraum kann evakuiert sein oder mit Luft oder einem anderen Material gefüllt sein. Zwischen dem Innenschlauch und dem Außenschlauch kann auch ein Zwischenschlauch angeordnet sein, der dazu eingerichtet ist, einen maximalen Biegewinkel des Zapfschlauchs zu begrenzen. Der Zwischenschlauch kann dazu insbesondere eine Mehrzahl von Schlauchsegmenten aufweisen, die jeweils mit benachbarten Schlauchsegmenten verhakt sind. Ein solcher Schlauch ist beispielsweise aus dem Dokument US 2001/0015233 A1 bekannt und wird auch als FloppyGuard^{™} bezeichnet.

Die Idee, eine Anordnung gemäß dem Anspruch 1 zur Abgabe eines kalten Mediums, insbesondere zur Abgabe eines komprimierten und/oder verflüssigten Gases bereitzustellen, wobei der Schlauch einen zur Durchleitung des Mediums ausgebildeten Innenschlauch und einen äußeren Heizschlauch aufweist, weist eigenständigen erfinderischen Gehalt auf. Insbesondere ist es bei einer solchen Zapfanlage nicht erforderlich, dass der Zapfschlauch und das Zapfventil dazu eingerichtet sind, in einer Zone 2 gemäß der ATEX-Betriebsrichtlinie 1999/92/EG betrieben zu werden. Auch ist es nicht erforderlich, dass die Zapfanlage einen zonenfrei ausgebildeten Bauraum aufweist, in dem die Steuereinheit positioniert ist.

Schließlich ist die Erfindung, wie oben bereits erwähnt, nicht auf Zapfschläuche zur Durchleitung eines komprimierten oder verflüssigten Gases beschränkt. In einer Ausführungsform kann der Zapfschlauch bzw. der Innenschlauch zur Durchleitung eines beliebigen Mediums ausgebildet sein. Insbesondre bei der Durchleitung von Medien, die eine tiefe Temperatur aufweisen, kann mit Hilfe des Zapfschlauchs die Gefahr einer Vereisung reduziert oder vermieden werden und so die Sicherheit und die Bewegbarkeit des Schlauchs erhöht werden.

Das Zapfventil und/oder der Zapfschlauch können dazu eingerichtet sein, in einer Zone 1 gemäß der ATEX-Betriebsrichtlinie 1999/92/EG betrieben zu werden. Möglich ist auch, dass das Zapfventil dazu ausgebildet ist, in einer Zone 0 gemäß der ATEX-Betriebsrichtlinie 1999/92/EG betrieben zu werden. Das Zapfventil und der Zapfschlauch können in diesem Fall in die Zone 0, also in eine Zone mit hoher Explosionsgefahr bewegt werden, so dass die erfindungsgemäße Zapfanlage noch flexibler positioniert werden kann.

In einer vorteilhaften Ausführungsform weist die Zapfanlage ein Gehäuse auf. Das Gehäuse kann ein eigenständiges Gehäuse einer Zapfsäule sein, welches beispielsweise benachbart zu einer Kraftstoffzapfsäule aufgestellt werden kann. Alternativ kann das Gehäuse auch ein Teil des Gehäuses einer Multidispenser-Zapfanlage mit zumindest einer Kraftstoffzapfstelle sein. Der Bauraum kann innerhalb des Gehäuses angeordnet sein, wobei das innere des Gehäuses vollständig zonenfrei ausgebildet sein kann. Alternativ kann im Gehäuse ein zonenfreier Teilbereich vorhanden sein, in dem der Bauraum angeordnet ist.

In einer bevorzugten Ausführungsform weist der Heizdraht zwei entlang der Axialrichtung des Zapfschlauchs verlaufende Drahtabschnitte auf, die fördereinrichtungsseitig mit der Steuereinheit verbunden sind und die zapfventilseitig miteinander kurzgeschlossen sind. Es hat sich gezeigt, dass diese Ausgestaltung die Herstellung des Zapfschlauchs und das Einbetten des Heizdrahts deutlich vereinfacht, da bei der Schlauchherstellung beide Drahtabschnitte gleichzeitig entlang des Schlauchs geführt werden können und es nicht notwendig ist, den Draht nach dem Entlangführen vom Schlauchanfang zum Schlauchende wieder zum Schlauchanfang zurückzuführen. Die beiden Drahtabschnitte können dabei in Längsrichtung des Schlauchs voreinander beabstandet um die Schlauchachse herumgeführt werden, beispielsweise parallel zueinander nach Art einer Doppelhelix.

Die beiden Drahtabschnitte können zapfventilseitig nach außen aus dem Zapfschlauch herausgeführt und außerhalb des Zapfschlauchs miteinander kurzgeschlossen sein. Bei der Verwendung von zwei Drahtabschnitten ist die Herstellung des Kurzschlusses der beiden Drahtabschnitte ein kritischer Vorgang, der sorgfältig ausgeführt werden muss, um gerade im Bereich des Zapfventils die Entstehung von Funken vermeiden zu können. Es hat sich gezeigt, dass durch das Herausführen des Heizdrahtes aus dem Zapfschlauch ein sicherer Zugang zu den Enden der Drahtabschnitte gewährleistet wird und die Enden entsprechend sicher elektrisch leitend miteinander verbunden werden können. Beispielsweise können die Drahtenden mittels einer elektrisch leitfähigen Klemmvorrichtung miteinander verbunden sein.

Vorzugsweise sind die beiden Drahtabschnitte fördereinrichtungsseitig nach außen aus dem Zapfschlauch herausgeführt und außerhalb des Zapfschlauchs zur Steuereinheit geführt. Diese Ausgestaltung ermöglicht es, die Drahtabschnitte außerhalb des Schlauchs sicher zur Steuereinheit zu führen. Auf diese Weise ist es nicht erforderlich, eine Anschlusskupplung, die zur Verbindung des Zapfschlauchs mit dem Gehäuse dient, derart zu modifizieren, dass die Drahtabschnitte innerhalb der Anschlusskupplung geführt werden.

In einer Ausführungsform kann die Zapfanlage einen Tanksignalgeber zur Detektion eines Tankvorgangs und zur Abgabe eines Tanksignals an die Steuereinheit aufweisen. Der Tanksignalgeber ist dazu eingerichtet, festzustellen, ob eine Ausbringung des Betriebsstoffs stattfindet. Beispielsweise kann er feststellen ob die Fördereinrichtung in Betrieb ist. Findet eine Ausbringung statt, wird vom Tanksignalgeber ein Tanksignal an die Steuereinheit abgegeben, welche daraufhin eine elektrische Leistung an den Heizdraht abgeben kann. Eine durch ein Tanksignal ausgelöste Aktivierung des Heizschlauchs ist insbesondere bei der Ausbringung eines komprimierten oder verflüssigten Gases von Vorteil, da in diesem Fall einer Vereisung gerade dann, wenn die Zapfanlage in Betrieb ist, entgegengewirkt werden muss. Die Steuereinheit ist vorzugsweise dazu ausgebildet, bei Empfang des Tanksignals unter Berücksichtigung einer Länge des Zapfschlauchs einen Leistungswert zu ermitteln und eine entsprechende Leistung an den Heizdraht abzugeben. Weiter vorzugsweise ist die Steuereinheit dazu ausgebildet, zur Ermittlung des Leistungswerts auf eine Datenbank zuzugreifen, in der Leistungswerte für verschiedene Längen des Zapfschlauchs abgelegt sind. Die Datenbank kann in der Steuereinheit abgelegt sein. Der Begriff "Datenbank" ist dabei weit zu verstehen. Insbesondere ist auch eine hardwarebasierte Kodierung der Daten möglich und die Verwendung einer Datenbanksoftware oder dergleichen nicht erforderlich. Die Ermittlung einer für eine ausreichende Erwärmung des Zapfschlauchs erforderlichen Heizleistung wird auf diese Weise deutlich vereinfacht.

Es kann vorgesehen sein, dass der Tanksignalgeber auch bei Beendung eines Tankvorgangs ein Tanksignal an die Steuereinheit abgibt, wobei die Steuereinheit vorzugsweise dazu eingerichtet ist, nach dem Empfang des Tanksignals innerhalb eines vorgegebenen Zeitraums die Leistungsabgabe abzuschalten.

Die Zapfanlage kann weiterhin einen mit der Steuereinheit verbundenen Luftfeuchtigkeitssensor und/oder einen mit der Steuereinheit verbundenen Temperatursensor aufweisen, wobei die Steuereinheit dazu ausgebildet ist, eine gemessene Temperatur und/oder eine gemessene Luftfeuchtigkeit bei der Ermittlung des an den Heizdraht abgegebenen Leistungswerts zu berücksichtigen. Die Datenbank kann dazu für verschiedene Temperaturen und/oder Luftfeuchtigkeitswerte entsprechende Leistungswerte aufweisen. Bei der Ausbringung eines komprimierten oder verflüssigten Gases wird die Vereisung des Zapfschlauchs von der Umgebungstemperatur und insbesondere auch von der Luftfeuchtigkeit in der Umgebung beeinflusst, so dass die Heizleistung durch die vorstehenden Merkmale deutlich besser an die tatsächlichen Bedürfnisse angepasst werden kann.

In einer Ausführungsform, insbesondere bei der Ausbringung von flüssigem Harnstoff, weist die Zapfanlage einen Temperatursensor zur Bestimmung einer Umgebungstemperatur der Zapfanlage auf, wobei ein Signalausgang des Temperatursensors mit der Steuereinheit verbunden ist. Bei Kenntnis der Außentemperatur kann die von der Steuereinheit abgegebene elektrische Heizleistung entsprechend dem tatsächlichen Heizbedarf angepasst werden.

Vorzugsweise ist die Steuereinheit dazu ausgebildet, unter Berücksichtigung einer Länge des Zapfschlauchs und der Umgebungstemperatur einen Leistungswert zu ermitteln und eine entsprechende elektrische Leistung an den Heizdraht abzugeben. Die Steuereinheit kann weiterhin dazu ausgebildet sein, zur Ermittlung des Leistungswerts auf eine Datenbank zuzugreifen, in der Leistungswerte für verschiedene Temperaturen und Schlauchlängen abgelegt sind. Die Datenbank kann in der Steuereinheit abgelegt sein. Der Begriff "Datenbank" ist dabei weit zu verstehen. Insbesondere ist auch eine hardwarebasierte Kodierung der Daten möglich und die Verwendung einer Datenbanksoftware oder dergleichen nicht erforderlich. Die Ermittlung einer für eine ausreichende Erwärmung des Zapfschlauchs erforderlichen Heizleistung wird auf diese Weise deutlich vereinfacht. Die Steuereinheit kann dazu ausgebildet sein, eine elektrische Leistung an den Heizdraht nur dann abzugeben, wenn die Umgebungstemperatur einen Schwellwert unterschreitet, welcher beispielsweise bei 5°C liegen kann. Der Schwellwert kann entsprechend in der Datenbank hinterlegt sein.

In einer vorteilhaften Ausführungsform kann vorgesehen sein, dass die Steuereinheit eine Eingabeeinrichtung zur Voreinstellung einer Länge des Zapfschlauchs aufweist. Wenn das Heizdrahtmaterial, der Heizdrahtquerschnitt sowie die Art Führung des Heizdrahts entlang des Zapfschlauchs vorgegeben sind, wird der elektrische Widerstand des Heizdrahts im Wesentlichen durch die Länge des Zapfschlauchs (und in geringerem Umfang durch die Umgebungstemperatur) festgelegt. Die vorstehend beschriebenen Merkmale haben somit den Vorteil, dass es zur Inbetriebnahme der Zapfanlage lediglich einmalig notwendig ist, die vorhandene Schlauchlänge des Zapfschlauchs mittels der Eingabeeinrichtung einzustellen. Diese Eingabe ist einfach möglich und kann durch eine Bedienperson einfach durch Inaugenscheinnahme des Zapfschlauchs verifiziert werden. Durch Zugriff auf die Datenbank kann die Steuereinheit dann eigenständig für jede Umgebungstemperatur und/oder für jeden Luftfeuchtigkeitswert eine geeignete Heizleistung an den Heizdraht abgeben. Bedienfehler, die beispielsweise bei manueller Eingabe einer temperatur- bzw. luftfeuchtigkeitsabhängigen Heizleistungskurve entstehen könnten, werden dadurch vermieden.

Es kann vorgesehen sein, dass die Steuereinheit dazu eingerichtet ist eine Leistung an den Heizdraht abzugeben, sobald eine vorgegebene Umgebungstemperatur unterschritten wird oder sobald ein Tanksignal empfangen wird. Bei einer festen Umgebungstemperatur kann vorgesehen sein, dass die Datenbank Vorgaben für eine Änderung der Leistung im Zeitverlauf enthält. Zudem kann vorgesehen sein, dass die Leistungsabgabe bei einer Änderung der Umgebungstemperatur gemäß den in der Datenbank abgelegten Leistungswerten angepasst wird.

Indem der Beginn der Leistungsabgabe und die Anpassung der Leistungsabgabe vollständig durch die in der Datenbank abgelegten Leistungswerte bestimmt sind, kann die Fehleranfälligkeit der erfindungsgemäßen Anlage deutlich reduziert werden. Bei der Erstellung der Datenbank wurden vorzugweise sämtliche Einflussgrößen, die sich auf die Umwandlung der elektrischen Leistung in Wärmeenergie auswirken (beispielsweise eine Änderung des elektrischen Widerstands des Heizdrahts in Abhängigkeit der Temperatur, Wärmekapazität und Wärmeleitfähigkeit des Schlauchs, Fließgeschwindigkeit des Betriebsstoffs), berücksichtigt. Abgesehen von einer initialen Eingabe der Schlauchlänge sind daher keinerlei Einstellungen an der Steuereinheit notwendig. Bedienfehler können dadurch ausgeschlossen werden.

Die Steuereinheit umfasst in einer Ausführungsform ein Sicherheitsmodul, das dazu ausgebildet ist die Leistungsabgabe an den Heizdraht abzuschalten, falls ein sicherheitsrelevantes Ereignis eintritt (Sicherheitsabschaltung). Insbesondere kann das Sicherheitsmodul ausgebildet sein zur Messung von zumindest einer elektrischen Ist-Größe des Heizdrahts, zur Ermittlung einer Abweichung zwischen der gemessenen Ist-Größe und einer vorgegebenen Soll-Größe und zur Abschaltung der Leistungsabgabe an den Heizdraht, falls die Ist-Größe von der Soll-Größe abweicht. Die Abschaltung kann beispielsweise vorgenommen werden, wenn die Abweichung der Ist-Größe von der Soll-Größe ein vorgegebenes Maß überschreitet. Die Abweichung einer Ist-Größe von einer entsprechenden Sollgröße stellt insoweit ein sicherheitsrelevantes Ereignis dar.

Vorzugsweise ist das Sicherheitsmodul dazu ausgebildet, zur Ermittlung der Soll-Größe auf eine Korrelationstabelle zuzugreifen, in der für verschiedene Gesamtlängen des Zapfschlauchs und ggf. für verschiedene Umgebungstemperaturen jeweils zugehörige Soll-Größen des Heizdrahtes abgelegt sind. Ebenso wie die Datenbank kann auch die Korrelationstabelle durch eine hardwarebasierte Kodierung von Daten gebildet sein.

Die elektrische Ist-Größe kann ein durch den Heizdraht fließender Strom und/oder eine am Heizdraht anliegende Spannung und/oder der elektrische Widerstand des Heizdrahts sein. Alternativ oder zusätzlich kann die elektrische Ist-Größe ein vom Heizdraht zu einer Erdung fließender Fehlerstrom sein.

Vorzugsweise ist das Sicherheitsmodul zur Überwachung von allen der vorstehend genannten elektrischen Ist-Größen eingerichtet, welche also gegeben sind durch einen durch den Heizdraht fließenden Strom, eine am Heizdraht anliegende Spannung und einen vom Heizdraht zu einer Erdung fließenden Fehlerstrom, wobei das Sicherheitsmodul zur Abschaltung der Leistungsabgabe an den Heizdraht ausgebildet ist, falls eine der Ist-Größen von der entsprechenden Soll-Größe abweicht.

Das Sicherheitsmodul kann darüber hinaus dazu eingerichtet sein, eine von einem Versorgungsnetz an die Steuereinheit bereitgestellte Versorgungsspannung zu ermitteln und die Leistungsabgabe an den Heizdraht bei einer Abweichung der ermittelten Versorgungsspannung von einem Sollwert (oder einem Sollwertbereich) abzuschalten. Weiterhin kann das Sicherheitsmodul dazu eingerichtet sein, einen vom Temperatursensor zur Bestimmung einer Umgebungstemperatur der Zapfanlage ermittelten Temperaturwert zu überwachen und die Leistungsabgabe an den Heizdraht abzuschalten, wenn der Temperaturwert außerhalb eines vorgegebenen Temperaturbereichs liegt (beispielsweise außerhalb von -70°C und +70°C). Abweichungen der vorstehend beschriebenen Temperatur und der Versorgungsspannung von entsprechenden Sollwerten (oder Sollwertbereichen) können ebenfalls beispielhafte sicherheitsrelevante Ereignisse darstellen.

Mittels des vorstehend beschriebenen Sicherheitsmoduls kann auf sichere Weise bei sämtlichen in Frage kommenden Fehlerarten (insbesondere bei Kurzschlüssen zwischen Heizdrahtabschnitten oder zur Erde, bei Kabelbrüchen, bei einer fehlerhaften Versorgungsspannung oder bei Fehlfunktionen des Temperatursensors) eine Sicherheitsabschaltung der elektrischen Leistungsabgabe vorgenommen werden, so dass im Fehlerfall die Gefahr einer Funkenerzeugung auf ein Minimum reduziert oder sogar vollständig eliminiert werden kann. Insbesondere führt ein fehlerhafter Kurzschluss (der zusätzlich zu einem ggf. ohnehin vorhandenen Kurzschluss zwischen den Drahtabschnitten auftritt) bei gegebener Leistungsabgabe dazu, dass ein höherer Strom sowie eine geringere Spannung als erwartet gemessen werden, was zu einer Abschaltung der Leistungsabgabe führt. Im Falle eines Kabelbruchs fließt zu wenig oder gar kein Strom mehr durch den Heizdraht, was ebenfalls eine Abschaltung auslöst. Schließlich führt eine fehlerhafte Einstellung der Schlauchlänge dazu, dass sowohl der Strom als auch die Spannung zu gering oder zu hoch ausfallen (abhängig davon, ob die tatsächliche Schlauchlänge nach oben oder nach unten von der eingestellten Schlauchlänge abweicht), so dass in diesem Fall ebenfalls eine Sicherheitsabschaltung erfolgen kann.

In einer bevorzugten Ausführungsform weist das Sicherheitsmodul einen Normalmodus auf, in dem eine Leistungsabgabe an den Heizdraht möglich ist, und einen Fehlermodus, in dem die Leistungsabgabe gesperrt ist. Vorzugsweise ist das Sicherheitsmodul und/oder die Steuereinheit dazu ausgebildet, nach einer Sicherheitsabschaltung das Sicherheitsmodul vom Normalmodus in den Fehlermodus umzuschalten. Aufgrund der Sperrung der Leistungsabgabe im Fehlermodus kann eine Leistungsabgabe erst nach einem Zurücksetzen des Sicherheitsmoduls vom Fehlermodus in den Normalmodus stattfinden. Zum Zurücksetzen des Sicherheitsmoduls ist vorzugsweise eine manuelle Rücksetzeinrichtung vorhanden, die beispielsweise durch einen manuellen Reset-Knopf gebildet sein kann. Auf diese Weise kann sichergestellt werden, dass ein Betrieb des Heizdrahtes nach einer Sicherheitsabschaltung erst dann fortgesetzt werden kann, wenn die Rücksetzeinrichtung beispielsweise durch einen Service-Techniker manuell betätigt wurde. Der Service-Techniker sollte vor dem Zurücksetzten die Zapfanlage überprüfen, den Fehler, welcher die Sicherheitsabschaltung ausgelöst hat, identifizieren und diesen nach Möglichkeit beheben.

Die Steuereinheit kann ein Leistungsabgabemodul aufweisen, das zur Ermittlung des Leistungswerts und zur Abgabe einer entsprechenden elektrischen Leistung an den Heizdraht ausgebildet ist, wobei das Leistungsabgabemodul und das Sicherheitsmodul zum Austausch von Kontrollsignalen ausgebildet sind, und wobei das Leistungsabgabemodul und/oder das Sicherheitsmodul zur Abschaltung der Leistungsabgabe an den Heizdraht ausgebildet sind, wenn innerhalb eines vorgegebenen Zeitraums kein Kontrollsignal empfangen wird. Das Ausbleiben des Empfangs eines Kontrollsignals stellt insoweit ebenfalls ein sicherheitsrelevantes Ereignis dar.

In einer bevorzugten Ausführungsform ist die Steuereinheit an ein Versorgungsnetz angeschlossen und vom Versorgungsnetz galvanisch getrennt. Die galvanische Trennung stellt sicher, dass im Versorgungsnetz vorhandene Schwankungen der elektrischen Leistungsgrößen sich nicht oder zumindest in verringertem Umfang auf den Heizdraht auswirken.

Ein Innendurchmesser des Zapfschlauchs kann zwischen 10 mm und 30 mm, vorzugsweise zwischen 15 mm und 25 mm liegen. In besonders bevorzugten Ausführungsformen liegt der Durchmesser bei 16 mm oder bei 21 mm. Eine Länge des Zapfschlauchs ist vorzugsweise kleiner als 6 m und kann beispielsweise zwischen 1 m und 6 m liegen.

Gegenstand eines Ausführungsbeispiels der vorliegenden Erfindung ist weiterhin eine Anordnung umfassend eine Kraftstoffzapfstelle und eine benachbart zur Kraftstoffzapfstelle angeordnete Zapfanlage zur Abgabe eines Betriebsstoffs. Die Anordnung weist eine Zone 2 gemäß der ATEX-Betriebsrichtlinie 1999/92/EG auf, wobei der Zapfschlauch und/oder das Zapfventil der erfindungsgemäßen Zapfanlage in die Zone 2 bewegbar ausgebildet sind, und wobei die Steuereinheit außerhalb einer Zone gemäß der ATEX-Betriebsrichtlinie 1999/92/EG angeordnet ist. Die Anordnung kann durch weitere Merkmale fortgebildet werden, welche vorstehend in Verbindung mit der Zapfanlage zur Abgabe eines Betriebsstoffs beschrieben wurden. Insbesondere kann die Anordnung auch eine Zone 1 und/oder eine Zone 0 aufweisen, in die der Zapfschlauch und/oder das Zapfventil der erfindungsgemäßen Zapfanlage bewegt werden können. Die jeweilige Atex-Zone wird dabei durch die Kraftstoffzapfstelle verursacht. Da die Steuereinheit im zonenfrei ausgebildeten Bauraum angeordnet ist, muss die Steuereinheit selbst nicht zum Betrieb in einer Atex-Zone ausgebildet sein.

In einer Ausführungsform umfasst die Zapfanlage weiterhin eine Thermosicherung, die in thermischem Kontakt mit dem Heizdraht steht und die dazu eingerichtet ist, einen Stromfluss durch den Heizdraht zu unterbrechen, wenn eine Temperatur der Thermosicherung einen Grenzwert überschreitet. Die Thermosicherung kann unmittelbar mit dem Heizdraht in mechanischem Kontakt stehen. Die Thermosicherung kann auch mittelbar mit dem Heizdraht in thermischem Kontakt stehen. Beispielsweise kann die Thermosicherung in den Heizschlauch eingebettet sein (also beispielsweise vom Kunststoffmaterial des Heizschlauchs umschlossen sein) oder in mechanischem Kontakt mit einer Oberfläche des Heizschlauchs stehen. In einer Ausführungsform befindet sich die Thermosicherung in einem Bereich außerhalb einer Zone 0, vorzugsweise außerhalb einer Zone 1, weiter vorzugsweise außerhalb einer Zone 2 gemäß der ATEX-Betriebsrichtlinie 1999/92/EG. Die Thermosicherung kann dazu insbesondere an einem fördereinrichtungsseitig aus dem Zapfschlauch herausgeführten Abschnitt des Heizdrahts positioniert sein. Vorzugsweise befindet sich die Thermosicherung innerhalb eines zonenfrei ausgebildeten Bauraums (beispielsweise in dem Bauraum, in dem auch die Steuereinheit positioniert ist), der sich in einem Gehäuse der Zapfanlage befinden kann.

Weiterhin kann die Thermosicherung ein in einen Drahtabschnitt des Heizdrahtes integriertes Schaltelement zur Unterbrechung eines Stromflusses durch den Heizdraht umfassen. Die Thermosicherung ist vorzugsweise unabhängig und separat von der Steuereinheit bzw. dem Sicherheitsmodul ausgebildet. Zudem ist die Thermosicherung vorzugsweise unabhängig von einer Energieversorgung der Steuereinheit bzw. dem Sicherheitsmodul. Die Thermosicherung kann irreversibel ausgebildet sein, kann in diesem Fall also nach einem Abschaltvorgang nicht mehr in einen stromleitenden Zustand zurückversetzt werden. Möglich ist auch, dass die Thermosicherung lediglich durch eine spezifische Rücksetzeinrichtung in einen stromleitenden Zustand zurückversetzt werden kann. Es kann vorgesehen sein, dass eine solche Rücksetzeinrichtung lediglich geschultem Servicepersonal zur Verfügung gestellt wird, welches einem Auslösen der Thermosicherung eine gründliche Untersuchung der Fehlerursache vornehmen kann, die zum Auslösen der Thermosicherung geführt hat.

Die Zapfanlage der erfindungsgemäßen Anordnung kann als eigenständige Zapfsäule ausgebildet sein, wobei die Kraftstoffzapfstelle als eigenständige Kraftstoffzapfsäule ausgebildet sein kann, die benachbart zur Zapfanlage aufgestellt ist. Alternativ kann die Anordnung als Multidispenser-Zapfanlage ausgebildet sein, wobei die Kraftstoffzapfstelle und die erfindungsgemäße Zapfanlage als Teil der Multidispenser-Zapfanlage ausgebildet sind.

Gegenstand der Erfindung ist eine Anordnung gemäß Anspruch 1. Die erfindungsgemäße Anordnung kann durch weitere Merkmale fortgebildet werden, die vorstehend in Verbindung mit der erfindungsgemäßen Zapfanlage bzw. der erfindungsgemäßen Anordnung beschrieben wurden. Insbesondere kann der Schlauch weitere Merkmale aufweisen, die vorstehend in Zusammenhang mit dem erfindungsgemäßen Zapfschlauch beschrieben wurden.

Im Rahmen der Erfindung wurde erkannt, dass die oben beschriebenen Vorteile nicht auf den Anwendungsbereich einer Zapfanlage beschränkt sind, sondern sich auch bei einem allgemeinen Schlauch zur Durchleitung eines Mediums einstellen. Beim Medium kann es sich beispielsweise um eine Chemikalie handeln, die während der Förderung durch den Schlauch temperiert werden muss, um beispielsweise ein Gefrieren, eine Verschlechterung der Qualität, oder auch eine sonstige Veränderung der chemischen oder physikalischen Eigenschaften (z.B. der Viskosität) der Chemikalie zu vermeiden.

In dem Fall, dass das Medium eine tiefe Temperatur aufweist, kann mit Hilfe des Heizdrahtes und der Steuereinheit zudem die Außenfläche des Schlauchs erwärmt werden, um ein Festsetzen und Gefrieren von Luftfeuchtigkeit zu vermeiden und die Handhabung des Schlauchs zu vereinfachen sowie die Sicherheit für einen Benutzer zu erhöhen.

In einer Ausführungsform weist der Heizdraht zwei entlang der Axialrichtung des Schlauchs verlaufende Drahtabschnitte auf, die einlassseitig mit der Steuereinheit verbunden sind und die auslassseitig nach außen aus dem Schlauch herausgeführt und außerhalb des Schlauchs miteinander kurzgeschlossen sind. Insbesondere bei der Förderung von explosiven oder entflammbaren Medien weist diese Ausgestaltung eine hohe Sicherheit und Zuverlässigkeit auf.

Die Anordnung ist erfindungsgemäß dazu ausgebildet, unter Berücksichtigung einer Länge des Schlauchs einen Leistungswert zu ermitteln und eine entsprechende Leistung an den Heizdraht abzugeben. Die Steuereinheit ist vorzugsweise dazu ausgebildet, zur Ermittlung des Leistungswerts auf eine Datenbank zuzugreifen, in der Leistungswerte für verschiedene Längen des Schlauchs abgelegt sind. Die Steuereinheit kann alternativ oder zusätzlich eine Eingabeeinrichtung zur Voreinstellung einer Länge des Schlauchs aufweisen.

In einer vorteilhaften Ausführungsform weist die Anordnung weiterhin einen Temperatursensor zur Bestimmung einer Umgebungstemperatur auf, wobei ein Signalausgang des Temperatursensors mit der Steuereinheit verbunden ist, wobei die Steuereinheit dazu eingerichtet ist, unter Berücksichtigung der Umgebungstemperatur einen Leistungswert zu ermitteln und eine entsprechende Leistung an den Heizdraht abzugeben, wobei die Steuereinheit vorzugsweise dazu ausgebildet ist, zur Ermittlung des Leistungswerts auf eine Datenbank zuzugreifen, in der Leistungswerte für verschiedene Umgebungstemperaturen abgelegt sind.

In einer Ausführungsform umfasst die Anordnung weiterhin einen Fördersignalgeber, der zur Detektion eines Fördervorgangs und zur Abgabe eines Fördersignals an die Steuereinheit ausgebildet ist. Der Fördersignalgeber kann beispielsweise zur Überwachung des Betriebs einer Fördervorrichtung für das Medium ausgebildet sein. Alternativ kann der Fördersignalgeber auch zur Messung einer Durchflussrate durch den Schlauch ausgebildet sein. Die Steuereinheit kann weiterhin dazu ausgebildet sein, bei Empfang des Fördersignals unter Berücksichtigung der Länge des Schlauchs einen Leistungswert zu ermitteln und eine entsprechende Leistung an den Heizdraht abzugeben, wobei die Steuereinheit weiter vorzugsweise dazu ausgebildet ist, zur Ermittlung des Leistungswerts auf eine Datenbank zuzugreifen, in der Leistungswerte für verschiedene Längen des Schlauchs abgelegt sind.

Der Schlauch kann einen das Medium führenden Innenschlauch und einen den Innenschlauch umgebenden Außenschlauch aufweisen, wobei der Außenschlauch die Schlauchwand umfasst, in die der Heizdraht eingebettet ist. Weiterhin kann das Medium ein komprimiertes und/oder verflüssigtes Gas sein. Alternativ kann das Medium auch eine wässrige Harnstofflösung sein.

Die Erfindung wird nachfolgend anhand einer beispielhaften Ausführungsform unter Bezugnahme auf die beigefügten Zeichnungen beispielhaft erläutert. Es zeigen:
- Figur 1:: eine Zapfanlage zur Abgabe eines Betriebsstoffs in einer Seitenansicht;
- Figur 1A:: eine weitere Zapfanlage zur Abgabe eines Betriebsstoffs in einer Seitenansicht;
- Figur 1B:: eine weitere Zapfanlage zur Abgabe eines Betriebsstoffs in einer Seitenansicht;
- Figur 2:: eine Multidispenser-Zapfanlage in einer Seitenansicht;
- Figur 3:: eine dreidimensionale Seitenansicht eines Zapfschlauchs der Zapfanlage;
- Figur 4:: eine schematische Darstellung einer Steuereinheit der Zapfanlage;
- Figur 5:: eine Seitenansicht eines erfindungsgemäßen Schlauchs zur Durchleitung eines komprimierten und/oder verflüssigten Gases;
- Figur 6:: eine seitliche Schnittansicht entlang der in Figur 5 gezeigten Linie A-A.

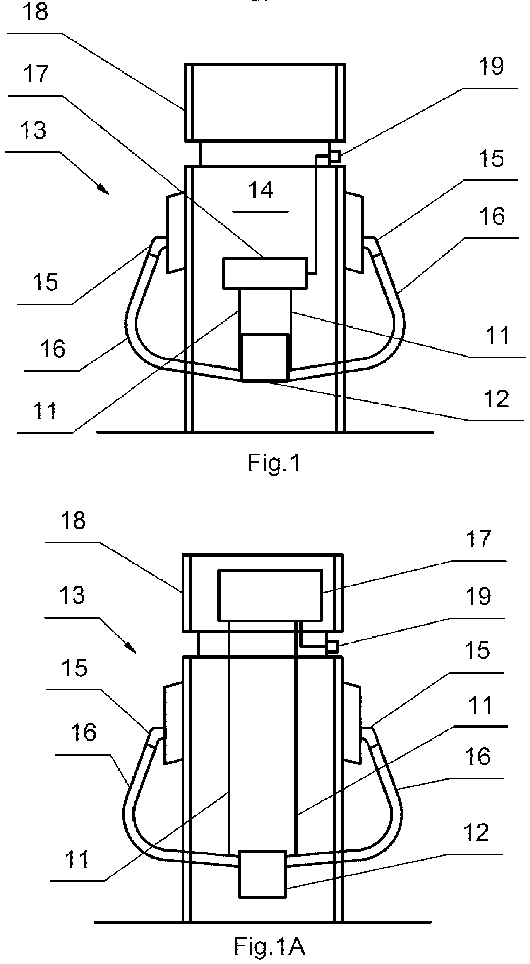

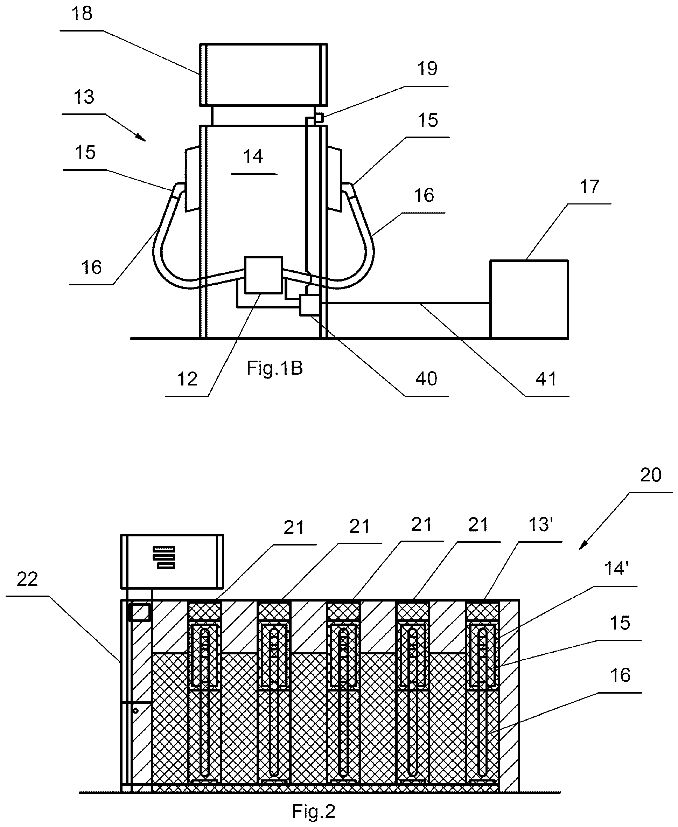

Figur 1 zeigt eine erfindungsgemäße Zapfanlage 13 zur Abgabe eines Betriebsstoffs in einer schematischen Seitenansicht. Beim Betriebsstoff handelt es sich vorliegend um eine wässrige Harnstofflösung (AdBlue^{®}). Die Anlage 13 ist als Zapfsäule mit einem Zapfsäulengehäuse 14 ausgebildet. An den beiden Seiten des Gehäuses 14 ist jeweils ein Zapfventil 15 zur Ausbringung des Betriebsstoffs eingehängt. Im Gehäuse 14 befindet sich zudem eine Fördereinrichtung 12, die über jeweils einen Zapfschlauch 16 mit den Zapfventilen 15 verbunden ist. Unterhalb des Gehäuses 14 kann ein mit der Fördereinrichtung 12 verbundener Betriebsstofftank angeordnet sein (nicht gezeigt).

In die Zapfschläuche 16 ist jeweils ein Heizdraht eingebettet, der sich vom zapfventilseitigen Ende bis zum fördereinrichtungsseitigen Ende des Zapfschlauchs 16 erstreckt. Im Bereich der Fördereinrichtung 12 ist der Heizdraht aus dem Zapfschlauch 16 herausgeführt und über Verbindungskabel 11 zu einer innerhalb des Gehäuses befindlichen Steuereinheit 17 geführt (in Figur 1 schematisch illustriert), die dazu ausgestaltet ist, den Heizdraht mit einer elektrischen Leistung zu beaufschlagen. In einem Bereich unterhalb eines Zapfsäulenkopfs 18 ist ein Temperatursensor 19 zur Bestimmung einer Umgebungstemperatur angeordnet. Der Temperatursensor 19 ist zur Weitergabe von Temperaturdaten an die Steuereinheit 17 eingerichtet.

Der Zapfschlauch 16 sowie die Zapfventile 15 sind dazu geeignet, in einer Atex-Zone 1 betrieben zu werden. Zudem ist das Gehäuse 14 dazu ausgestaltet, die darin befindliche Steuereinheit 17 gegenüber einer außerhalb des Gehäuses 14 befindlichen Atex-Zone 1 und 2 abzuschirmen. Das innere des Gehäuses 14 stellt insoweit einen zonenfrei ausgebildeten Bauraum dar. Es ist daher möglich, die Zapfanlage 13 benachbart zu einer Kraftstoffzapfsäule, deren unmittelbare Umgebung als Atex-Zone 1 bzw. Atex-Zone 2 klassifiziert ist, aufzustellen. Auch wenn es möglich ist, das Zapfventil 15 und der Zapfschlauch 16 in die Atex-Zone 1 bzw. 2 der Kraftstoffsäule zu bewegen, kann die Zapfanlage 13 dennoch unter Einhaltung der ATEX-Betriebsrichtlinien 1999/92/EG und 2014/34/EU betrieben werden.

In der alternativen Ausführungsform der Figur 1A ist lediglich ein Teilbereich des Gehäuses 14, nämlich der Säulenkopf 18, zonenfrei ausgebildet und die Steuereinheit 17 in diesem zonenfreien Teilbereich angeordnet. Der gesamte Säulenkopf 18 bildet in diesem Fall einen zonenfreien Bauraum. In alternativen Ausführungsformen kann der zonenfrei ausgebildete Bauraum auch einen Teilbereich des Säulenkopfs 18 einnehmen, es ist also nicht erforderlich, dass der gesamte Säulenkopf 18 zonenfrei ausgebildet ist. In der alternativen Ausführungsform der Figur 1B ist die Steuereinheit 17 in einem zonenfreien Bauraum angeordnet, der sich außerhalb des Gehäuses 14 befindet. Dazu sind die Verbindungskabel 11 sowie der Temperatursensor 19 zu einem gemeinsamen Anschluss 40 geführt, der wiederum durch entsprechende Leitungen 41 mit der Steuereinheit verbunden ist. Die Steuereinheit 17 kann sich beispielsweise in einem Nebengebäude oder einem separaten Gehäuse befinden. Die Ausführungsformen der Figuren 1A und 1B sind von den vorstehend beschriebenen Unterschieden abgesehen mit der Ausführungsform der Figur 1 identisch.

In einer alternativen Ausführungsform kann die in Figur 1 gezeigte Zapfanlage auch zur Ausbringung von LNG ausgebildet sein. In diesem Fall kann die Fördereinrichtung 12 dazu eingerichtet sein, zu Beginn und nach Abschluss eines Tankvorgangs jeweils ein Tanksignal an die Steuereinheit 17 abzugeben und stellt insoweit einen Tanksignalgeber dar. Alternativ kann natürlich ein separater Tanksignalgeber vorgesehen sein, der beispielsweise die Öffnung des Zapfventils oder den Durchfluss eines Abschnitts der Zapfanlage überwacht, um den Beginn und das Ende eines Tankvorgangs festzustellen und entsprechende Tanksignale abzugeben. Darüber hinaus ist in dieser Ausführungsform zusätzlich zum Temperatursensor ein mit der Steuereinheit verbundener Luftfeuchtigkeitssensor (nicht gezeigt) vorgesehen. Nach Empfang des Tanksignals beaufschlagt die Steuereinrichtung 17 den Heizdraht mit einer elektrischen Leistung, wobei sie dazu die in der Umgebung vorherrschende Luftfeuchtigkeit sowie die Umgebungstemperatur berücksichtigt. Während des Tankvorgangs wird der Zapfschlauch 16 durch den Heizdraht erwärmt, so dass einer Vereisung des Zapfschlauchs 16 effektiv entgegengewirkt werden kann. Nach dem Ende des Tankvorgangs empfängt die Steuereinheit 17 erneut das Tanksignal und beendet daraufhin nach Ablauf eines vorgegebenen Zeitintervalls die Leistungsabgabe an den Heizdraht.

Figur 2 zeigt eine erfindungsgemäße Multidispenser-Zapfanlage 20, die eine Zapfanlage 13' zur Abgabe einer wässrigen Harnstofflösung sowie vier Zapfstellen 21 zur Abgabe eines Kraftstoffs umfasst. Die Multidispenser-Zapfanlage 20 weist ein gemeinsames Gehäuse 22 auf, in das die Zapfstellen 21 und die Zapfanlage 13' integriert sind. Ein Teil 14' des Gehäuses 22 ist der Zapfanlage 13' zugeordnet. Die Kraftstoffzapfstellen 21 sind auf grundsätzlich aus dem Stand der Technik bekannte Weise ausgebildet. Die Zapfanlage 13' umfasst die weiteren oben bereits in Verbindung mit Figur 1 beschriebenen Elemente, so dass diese nicht erneut beschrieben werden.

Da während der Benutzung der Kraftstoffzapfstellen 21 Kraftstoffdämpfe austreten können, ist die Umgebung der Kraftstoffzapfstellen 21 als Atex-Zone 1 (in Figur 2 durch eine karierte Schraffur illustriert) sowie als Atex-Zone 2 (in Figur 2 durch eine einfache Schraffur illustriert) klassifiziert. Es ist erkennbar, dass der Zapfschlauch 16 sowie das Zapfventil 15 sich innerhalb der Atex-Zone 2 sowie am Rande der Atex-Zone 1 befinden. Innerhalb des Gehäuses 22 befindet sich ein Bauraum, in dem die Steuereinheit 17 (in Figur 2 nicht erkennbar) angeordnet ist, die zur Leistungsabgabe an den im Zapfschlauch 16 eingebetteten Heizdraht ausgebildet ist. Der Bauraum (in Figur 2 nicht gezeigt) ist räumlich derart von der Umgebung getrennt, dass die Kraftstoffdämpfe innerhalb des Bauraums keine explosionsfähige Atmosphäre ausbilden können. Der Bauraum ist daher frei von einer Atex-Zone. Die Steuereinheit ist selbst nicht zum Betrieb in einer Atex-Zone ausgebildet und darf aufgrund der Positionierung innerhalb des Bauraums dennoch richtlinienkonform betrieben werden.

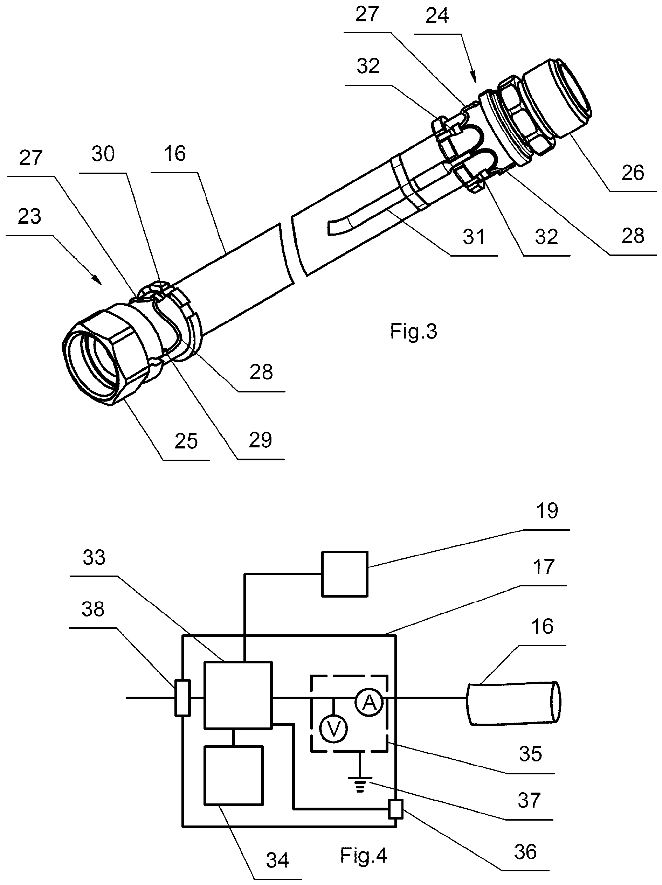

Figur 3 zeigt ein zapfventilseitiges Ende 23 sowie ein fördereinrichtungsseitiges Ende 24 des Zapfschlauchs 16 einer erfindungsgemäßen Anlage zur Abgabe eines Betriebsstoffs. Am zapfventilseitigen Ende 23 des Zapfschlauchs 16 befindet sich eine Kupplung 25 zur Verbindung mit dem Zapfventil. Am gehäuseseitigen Ende 24 des Zapfschlauchs 16 befindet sich eine Kupplung 26 zur Verbindung des Zapfschlauchs 16 mit der Fördereinrichtung. In den Zapfschlauch ist vorliegend ein Heizdraht eingebettet, der aus einem ersten Heizdrahtabschnitt 27 und einem zweiten Heizdrahtabschnitt 28 besteht. Die beiden Abschnitte 27, 28 sind in einem Abstand zueinander in etwa parallel verlaufend nach Art einer Doppelhelix um die zentrale Achse des Schlauchs 16 herumgewickelt. Auf diese Weise kann eine gleichmäßige Wärmeverteilung erreicht werden.

Am zapfventilseitigen Ende 23 des Zapfschlauchs 16 sind die Drahtabschnitte 27, 28 durch jeweils eine Öffnung 29 in der Schlauchwand aus dem Schlauch 16 herausgeführt und mittels einer Crimphülse 30 miteinander kurzgeschlossen. Am gehäuseseitigen Ende 24 sind die Drahtabschnitte 27, 28 ebenfalls über entsprechende Öffnungen aus dem Schlauch 16 herausgeführt und mittels zweier Crimphülsen 32 mit einer Zuleitung 31 verbunden, über die eine Verbindung zur Steuereinheit hergestellt ist.

Figur 4 zeigt eine schematische Darstellung der Steuereinheit 17 der erfindungsgemäßen Anlage. Die Steuereinheit 17 umfasst ein Leistungsabgabemodul 33, das zur Ermittlung eines Leistungswerts und zur Abgabe einer entsprechenden elektrischen Leistung an den im Heizschlauch 16 eingebetteten Heizdraht ausgebildet ist. Zur Versorgung mit elektrischer Energie ist die Steuereinheit 17 über eine galvanische Trennung 38 an ein Versorgungsnetz angeschlossen.

Die Steuereinheit 17 umfasst zudem eine Datenbank 34, in der für verschiedene Längen des Zapfschlauchs 16 sowie für verschiedene Umgebungstemperaturen Leistungswerte abgelegt sind. Diese Leistungswerte sind so ausgelegt, dass der Zapfschlauch in ausreichendem Maße erwärmt wird, so dass der dadurch fließende Betriebsstoff nicht gefriert. Diese Ausgestaltung kommt insbesondere zum Einsatz, wenn es sich beim Betriebsstoff um eine wässrige Harnstofflösung handelt. Weiterhin umfasst die Steuereinheit eine Eingabeeinrichtung 36 zur initialen Eingabe einer Zapfschlauchlänge.

Das Leistungsabgabemodul 33 empfängt in regelmäßigen Zeitabständen einen Temperaturwert des Temperatursensors 19. Mit Hilfe dieses Temperaturwerts sowie unter Verwendung der initial eingegebenen Zapfschlauchlänge entnimmt das Leistungsabgabemodul 33 der Datenbank 34 einen geeigneten Leistungswert und gibt anschließend eine entsprechende Leistung an den Heizdraht ab.

In dem alternativen Fall, dass die Zapfanlage zur Ausbringung von LNG eingerichtet ist, können in der Datenbank 34 zudem Leistungswerte für verschiedene Luftfeuchtigkeitswerte abgelegt sein. In diesem Fall sind die Leistungswerte so ausgelegt, dass der Zapfschlauch in ausreichendem Maße erwärmt wird, so dass eine Vereisung des Zapfschlauchs aufgrund von in der Umgebungsluft vorhandener Luftfeuchtigkeit verhindert oder zumindest reduziert wird. Das Leistungsabgabemodul greift in diesem Fall nach dem Empfang des Tanksignals unter Berücksichtigung der Umgebungstemperatur, der Luftfeuchtigkeit und der initial eingegebenen Zapfschlauchlänge auf die Datenbank 34 zu und entnimmt dieser einen geeigneten Leistungswert, um eine entsprechende Leistung an den Heizdraht abzugeben.

Die Steuereinheit 17 umfasst außerdem ein Sicherheitsmodul 35, das zur Messung einer am Heizdraht anliegenden Spannung, eines durch den Heizdraht fließenden Stroms sowie eines vom Heizdraht zu einer Erdung 37 fließenden Fehlerstroms ausgebildet ist. Das Sicherheitsmodul 35 prüft in kurzen Zeitabständen, ob die ermittelten Messgrößen mit vorgegebenen Soll-Größen übereinstimmten, bzw. nur innerhalb vorgegebener Toleranzen von den Soll-Größen abweichen. Entsprechende Soll-Größen sind in einer Korrelationstabelle abgelegt, auf die das Sicherheitsmodul zugreifen kann. Sobald eine außerhalb einer Toleranzgrenze liegende Abweichung detektiert wird, beendet das Sicherheitsmodul 35 die Leistungsabgabe an den Heizdraht, es kommt also zu einer Sicherheitsabschaltung. Darüber hinaus prüft das Sicherheitsmodul in regelmäßigen Zeitabständen, ob die vom Versorgungsnetz bereitgestellte Versorgungsspannung sowie die vom Temperatursensor 19 ermittelte Temperatur innerhalb vorgegebener Sollwertbereiche liegen. Ist dies nicht der Fall, beendet das Sicherheitsmodul ebenfalls die Leistungsabgabe an den Heizdraht. Schließlich sind das Leistungsabgabemodul 33 und das Sicherheitsmodul zum Austausch von Kontrollsignalen ausgebildet. Sobald eines der Elemente Leistungsabgabemodul und Sicherheitsmodul innerhalb eines vorgegebenen Zeitraums vom jeweils anderen Element kein Kontrollsignal mehr empfängt, schaltet es die Leistungsabgabe an den Heizdraht ab.

Nach einer Sicherheitsabschaltung aktiviert das Sicherheitsmodul 35 einen Fehlermodus, in dem die Leistungsabgabe an den Heizdraht gesperrt ist. Erst wenn das Sicherheitsmodul manuell, beispielsweise durch einen Servicetechniker, vom Fehlermodus zurück in den Normalmodus geschaltet wird, kann eine erneute Leistungsabgabe an den Heizdraht erfolgen. Das Zurücksetzen des Sicherheitsmoduls 35 in den Normalmodus kann vorliegend über die Eingabeeinrichtung 36 erfolgen. In alternativen Ausführungsformen kann für das Zurücksetzen ein separater, manueller Reset-Knopf vorgesehen sein.

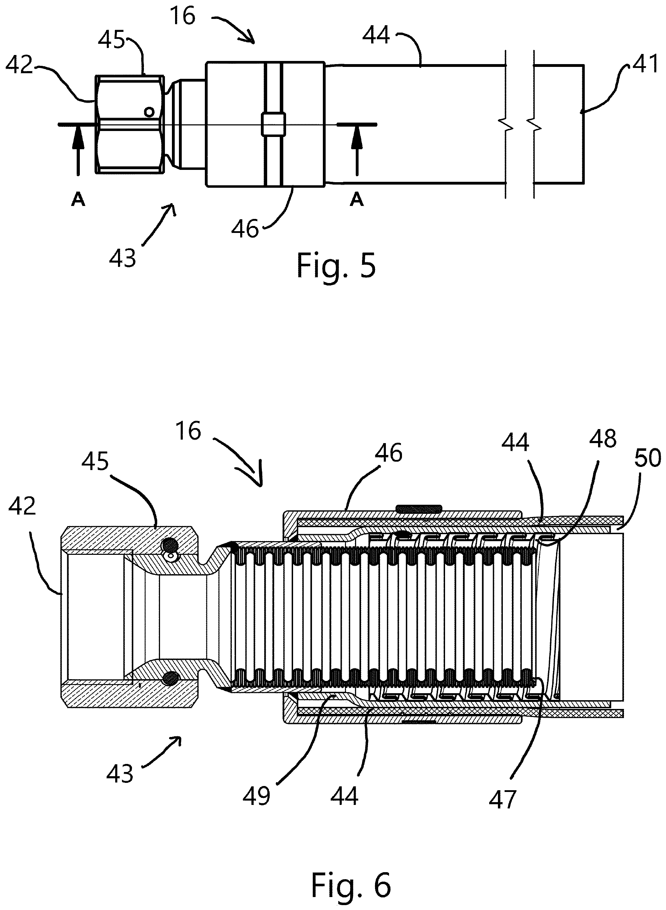

Figur 5 zeigt eine Seitenansicht eines erfindungsgemäßen Schlauchs 16 zur Durchleitung von LNG. Der Schlauch 16 der Figur 5 kann in einer erfindungsgemäßen Zapfanlage zur Anwendung kommen. Zudem kann der Schlauch 16 zusammen mit der in Figur 4 gezeigten Steuereinheit in einer erfindungsgemäßen Anordnung zum Einsatz kommen. Der Schlauch 16 weist einerseits einen Einlass 41 und andererseits einen Auslass 42 auf. Am Auslass 42 befindet sich ein Kupplungsteil 43, das zur Herstellung einer Verbindung mit einem Behälter oder mit einem Zapfventil (nicht gezeigt) ausgebildet ist. Der Einlass 41, welcher ebenfalls mit einem Kupplungsteil ausgestattet sein kann (vorliegend nicht dargestellt), führt zu einer Fördereinrichtung (nicht gezeigt). Mittels der Fördereinrichtung gefördertes LNG kann durch den Schlauch 16 in den Behälter eingeleitet werden. Eine Temperatur des geförderten LNG liegt üblicherweise zwischen -110°C und -170°C. Während der Förderung steht das LNG üblicherweise unter einem Druck zwischen 7 bar und 15 bar. Das LNG wird durch einen Innenschlauch 47 des Schlauchs 16 geleitet (siehe Figur 6). Der Innenschlauch 47 ist für die vorstehenden Temperatur- und Druckbereiche ausgelegt. Der Schlauch 16 weist zudem einen den Innenschlauch 47 umgebenden Außenschlauch 44 auf, der vorliegend als Heizschlauch ausgebildet ist. Dies bedeutet, dass innerhalb des Außenschlauchs 44 ein Heizdraht entlang der Axialrichtung geführt ist. Der Heizdraht ist ebenso wie bei der Ausführungsform der Figur 3 einlassseitig und auslassseitig aus dem Außenschlauch 44 nach außen herausgeführt, wobei der Heizdraht auslassseitig kurzgeschlossen und einlassseitig zu einer Steuereinheit (nicht gezeigt) geführt ist. Da die Ausgestaltung und Positionierung des Heizdrahtes in den Ausführungsformen der Figuren 3 und 5 im Wesentlichen identisch ist, ist der Heizdraht der Übersicht halber in den Figuren 5 und 6 weggelassen. Die Steuereinheit ist analog zu der in Verbindung mit Figur 4 beschriebenen Steuereinheit ausgestaltet und in den Figuren 4 und 5 ebenfalls nicht erneut dargestellt.

Das Kupplungsteil 43 umfasst ein Fitting 45 und eine Außenhülse 46, die den Außenschlauch 44 eng umschließt und so auf grundsätzlich bekannte Weise eine Fixierung der Schlauchelemente am Kupplungsstück 43 bewirkt. Weitere Details der Ausgestaltung des Schlauchs 16 sind aus der Figur 6 ersichtlich, in der eine seitliche Schnittansicht entlang der in Figur 5 gezeigten Linie A-A zu sehen ist.

In Figur 6 ist insbesondere der Innenschlauch 47 des Schlauchs 16 erkennbar. Der Innenschlauch 47 umfasst vorliegend einen Metallwellschlauch und ein Metallgeflecht, das den Metallwellschlauch ummantelt. Durch das Metallgeflecht wird die Druckbeständigkeit des Innenschlauchs 47 erhöht. Weiterhin ist zwischen dem Innenschlauch 47 und dem Außenschlauch 44 ein Zwischenschlauch 48 angeordnet, der eine Mehrzahl von ineinander gehakten Schlauchelementen sowie ein Federspiralelement aufweist, welches sich auf grundsätzlich bekannte Weise spiralförmig um die Außenkontur des Zwischenschlauchs 48 herum erstreckt. Ein solcher Zwischenschlauch kann auch als FloppyGuard^{™} bezeichnet werden. Zwei benachbarte ineinander verhakte Schlauchelemente des Zwischenschlauchs 48 können relativ zueinander bis zu einem gewissen maximalen Biegewinkel verschwenkt werden, so dass innerhalb eines bestimmten Winkelbereichs eine freie Verbiegung des Schlauchs 16 möglich ist. Bei Erreichen des maximalen Biegewinkels blockieren benachbarte Schlauchelemente und verhindern so eine weitere Verbiegung des Schlauchs. In alternativen Ausführungsformen kann der Zwischenschlauch auch als reine Federspirale ausgebildet sein (also ohne ineinander verhakte Schlauchelemente). Eine solche Federspirale dient ebenfalls zur Begrenzung eines maximalen Biegewinkels. Es hat sich zudem gezeigt, dass durch die genannten Zwischenschläuche auf einfache Weise ein geeigneter thermischer Kontakt zwischen dem Innenschlauch und dem Außenschlauch hergestellt werden kann, um während der Förderung von LNG bei gleichzeitiger Aktivierung des Heizschlauchs eine Vereisung des Innenschlauchs sowie des Außenschlauchs auf sichere Weise zu verhindern.

Zwischen dem Zwischenschlauch 48 und dem Außenschlauch 44 befindet sich zudem eine Hülse 49, die zur Fixierung der Schlauchelemente an der Außenhülse 46 dient. Die Hülse 49 erstreckt sich in Axialrichtung über einen Teilbereich des Schlauchs 16. Insbesondere in von der Außenhülse 46 in Längsrichtung entfernten Abschnitten des Schlauchs 16 ist zwischen dem Außenschlauch 44 und dem Zwischenschlauch 48 ein Zwischenraum 50 vorhanden, der mit Luft gefüllt ist. In alternativen Ausführungsformen kann der Außenschlauch 44 auch direkt am Zwischenschlauch 48 anliegen.

Während der Ausbringung von LNG kühlt der Innenschlauch 47 stark ab und nimmt eine Temperatur im Bereich zwischen -110°C und -170°C an. Die Kälte wird über den Zwischenschlauch 48 und die Presshülse 49 bzw. den Zwischenraum 50, welcher mit Luft gefüllt ist, an den Außenschlauch 44 weitergegeben. Die Steuereinheit wird während der Ausbringung des LNGs auf die oben bereits in Verbindung mit den Figuren 1 bis 4 beschriebene Weise aktiviert, um eine elektrische Leistung an den Heizdraht abzugeben. Dadurch wird der Außenschlauch 44 erwärmt und die Bildung von Eis an den Außenflächen des Innenschlauchs 47, des Zwischenschlauchs 48 sowie des Außenschlauchs 44 verringert oder sogar vollständig verhindert. Der Schlauch 16 bleibt auf diese Weise beweglich, so dass ein Benutzer das Kupplungsteil 43 leicht mit einem Behälter verbinden und nach einem Fördervorgang wieder davon lösen kann. Zudem ist der Benutzer aufgrund des Heizschlauchs vor Erfrierungen geschützt.

## Patentansprüche

1. Anordnung umfassend einen flexiblen Schlauch (16) zur Durchleitung eines Mediums und eine Steuereinheit (17) zur Abgabe einer elektrischen Leistung, wobei der Schlauch (16) einen Einlass (41), einen Auslass (42) und eine Schlauchwand aufweist, in die ein entlang einer Axialrichtung des Schlauchs (16) geführter Heizdraht (27, 28) eingebettet ist, wobei die Steuereinheit (17) zur Abgabe elektrischer Leistung an den Heizdraht (27, 28) eingerichtet ist, um eine Außenfläche des Schlauchs (16) und/oder ein durch den Schlauch (16) gefördertes Medium zu erwärmen, **gekennzeichnet dadurch, dass**
die Anordnung weiterhin dazu ausgebildet ist, unter Berücksichtigung einer Länge des Schlauchs (16) einen Leistungswert zu ermitteln und eine entsprechende Leistung an den Heizdraht (27, 28) abzugeben.

2. Anordnung gemäß Anspruch 1, bei der der Heizdraht (27, 28) zwei entlang der Axialrichtung des Schlauchs verlaufende Drahtabschnitte (27, 28) aufweist, die einlassseitig mit der Steuereinheit (17) verbunden sind und die auslassseitig nach außen aus dem Schlauch (16) herausgeführt und außerhalb des Schlauchs (16) miteinander kurzgeschlossen sind.

3. Anordnung gemäß Anspruch 1 oder 2, die weiterhin dazu ausgebildet ist, zur Ermittlung des Leistungswerts auf eine Datenbank (34) zuzugreifen, in der Leistungswerte für verschiedene Längen des Schlauchs (16) abgelegt sind und/oder bei der die Steuereinheit (17) eine Eingabeeinrichtung (36) zur Voreinstellung einer Länge des Zapfschlauchs (16) aufweist.

4. Anordnung gemäß einem der Ansprüche 1 bis 3, welche weiterhin einen Temperatursensor (19) zur Bestimmung einer Umgebungstemperatur aufweist, wobei ein Signalausgang des Temperatursensors (19) mit der Steuereinheit (17) verbunden ist, wobei die Steuereinheit dazu eingerichtet ist, unter Berücksichtigung der Umgebungstemperatur einen Leistungswert zu ermitteln und eine entsprechende Leistung an den Heizdraht (27, 28) abzugeben, wobei die Steuereinheit (17) vorzugsweise dazu ausgebildet ist, zur Ermittlung des Leistungswerts auf eine Datenbank (34) zuzugreifen, in der Leistungswerte für verschiedene Umgebungstemperaturen abgelegt sind.

5. Anordnung gemäß einem der Ansprüche 1 bis 4, bei der die Steuereinheit (17) ein Sicherheitsmodul (35) aufweist, das ausgebildet ist zur Messung von zumindest einer elektrischen Ist-Größe des Heizdrahts (27, 28), zur Ermittlung einer Abweichung zwischen der gemessenen Ist-Größe und einer vorgegebenen Soll-Größe und zur Abschaltung der Leistungsabgabe an den Heizdraht (27, 28), falls die Ist-Größe von der Soll-Größe abweicht, wobei die elektrische Ist-Größe weiter vorzugsweise ein durch den Heizdraht (27, 28) fließender Strom und/oder eine am Heizdraht (27, 28) anliegende Spannung und/oder ein vom Heizdraht (27, 28) zu einer Erdung (37) fließender Fehlerstrom ist, wobei das Sicherheitsmodul (35) vorzugsweise dazu ausgebildet ist, zur Ermittlung der Soll-Größe auf eine Korrelationstabelle zuzugreifen, in der für verschiedene Gesamtlängen des Schlauchs (16) und ggf. für verschiedene Umgebungstemperaturen jeweils zugehörige Soll-Größen abgelegt sind.

6. Anordnung gemäß einem der Ansprüche 1 bis 5, bei der die Steuereinheit (17) ein Leistungsabgabemodul (33) und ein Sicherheitsmodul (35) aufweist, wobei das Leistungsabgabemodul (33) und das Sicherheitsmodul (35) zum Austausch von Kontrollsignalen ausgebildet sind, wobei das Leistungsabgabemodul (33) und/oder das Sicherheitsmodul (35) zur Abschaltung der Leistungsabgabe an den Heizdraht ausgebildet sind, wenn innerhalb eines vorgegebenen Zeitraums kein Kontrollsignal empfangen wird, wobei die Steuereinheit (17) vorzugsweise an ein Versorgungsnetz angeschlossen und vom Versorgungsnetz galvanisch getrennt ist.

7. Anordnung gemäß einem der Ansprüche 5 oder 6, bei der das Sicherheitsmodul (35) zumindest eines der nachfolgenden Merkmale aufweist:
- das Sicherheitsmodul (35) ist dazu eingerichtet, eine von einem Versorgungsnetz an die Steuereinheit (17) bereitgestellte Versorgungsspannung zu ermitteln und die Leistungsabgabe an den Heizdraht bei einer Abweichung der ermittelten Versorgungsspannung von einem Sollwert oder einem Sollwertbereich abzuschalten und/oder
- das Sicherheitsmodul (35) ist dazu eingerichtet, einen von einem Temperatursensor (19) zur Bestimmung einer Umgebungstemperatur der Zapfanlage (13, 13') ermittelten Temperaturwert zu überwachen und die Leistungsabgabe an den Heizdraht abzuschalten, wenn der Temperaturwert außerhalb eines vorgegebenen Temperaturbereichs liegt und/oder
- das Sicherheitsmodul (35) weist einen Normalmodus auf, in dem eine Leistungsabgabe an den Heizdraht möglich ist, und einen Fehlermodus, in dem die Leistungsabgabe gesperrt ist, wobei das Sicherheitsmodul (35) und/oder die Steuereinheit dazu ausgebildet ist, das Sicherheitsmodul nach einer Sicherheitsabschaltung vom Normalmodus in den Fehlermodus umzuschalten, wobei das Sicherheitsmodul (35) vorzugsweise eine manuelle Rücksetzeinrichtung zum Zurücksetzen des Sicherheitsmoduls vom Fehlermodus in den Normalmodus aufweist.

8. Anordnung gemäß einem der Ansprüche 1 bis 7, die weiterhin einen Fördersignalgeber, der zur Detektion eines Fördervorgangs und zur Abgabe eines Fördersignals an die Steuereinheit (17) ausgebildet ist, wobei die Steuereinheit (17) dazu ausgebildet ist, bei Empfang des Fördersignals den Leistungswert zu ermitteln und die entsprechende Leistung an den Heizdraht (27, 28) abzugeben.

9. Anordnung gemäß einem der Ansprüche 1 bis 8, bei der der Schlauch (16) einen das Medium führenden Innenschlauch (47) und einen den Innenschlauch (47) umgebenden Außenschlauch (44) aufweist, wobei der Außenschlauch (44) die Schlauchwand umfasst, in die der Heizdraht (27, 28) eingebettet ist, wobei das Medium vorzugsweise ein komprimiertes und/oder verflüssigtes Gas ist, wobei der Innenschlauch (47) weiter vorzugsweise als Metallwellschlauch ausgebildet ist.

10. Anordnung gemäß einem der Ansprüche 1 bis 9, weiterhin umfassend:
- eine Fördereinrichtung für das Medium, und
- ein Zapfventil (15) zur Ausbringung des Mediums,
wobei der Schlauch (16) die Fördereinrichtung mit dem Zapfventil (15) verbindet, wobei die Anordnung als Zapfanlage (13, 13`) zur Abgabe des Mediums in einen Fahrzeugtank ausgebildet ist, wobei das Medium ein Betriebsstoff ist, insbesondere eine wässrige Harnstofflösung oder eine komprimiertes und/oder verflüssigtes Gas, wobei der Schlauch ein flexibler Zapfschlauch (16) ist, der ein Positionieren des Zapfventils (15) an einem Einfüllstutzen des Fahrzeugtanks oder an einem Betriebsstoffbehälter zu ermöglicht.

11. Anordnung gemäß Anspruch 10, bei der der Zapfschlauch (16) und das Zapfventil (15) dazu eingerichtet sind, in einer Zone 2 gemäß der ATEX-Betriebsrichtlinie 1999/92/EG betrieben zu werden, und wobei die Zapfanlage (13, 13`) weiterhin einen zonenfrei ausgebildeten Bauraum aufweist, in dem die Steuereinheit (17) positioniert ist.

12. Anordnung gemäß Anspruch 11, welche weiterhin ein Gehäuse (14, 14`) aufweist, wobei der Bauraum innerhalb des Gehäuses angeordnet ist.

13. Anordnung gemäß einem der Ansprüche 10 bis 12, bei der der Betriebsstoff ein komprimiertes und/oder verflüssigtes Gas ist, wobei die Anordnung weiterhin einen mit der Steuereinheit (17) verbundenen Luftfeuchtigkeitssensor und/oder einen Temperatursensor (19) aufweist, wobei die Steuereinheit dazu ausgebildet ist, eine gemessene Temperatur und/oder eine gemessene Luftfeuchtigkeit bei der Ermittlung des an den Heizdraht abgegebenen Leistungswerts zu berücksichtigen.

14. Anordnung gemäß einem der Ansprüche 10 bis 13, die weiterhin eine Thermosicherung aufweist, die in thermischem Kontakt mit dem Heizdraht steht und die dazu eingerichtet ist, einen Stromfluss durch den Heizdraht zu unterbrechen, wenn eine Temperatur der Thermosicherung einen Grenzwert überschreitet, wobei sich die Thermosicherung vorzugsweise in einem Bereich außerhalb einer Zone 0 gemäß der ATEX-Betriebsrichtlinie 1999/92/EG befindet und wobei die Thermosicherung weiter vorzugsweise an einem fördereinrichtungsseitig aus dem Zapfschlauch herausgeführten Abschnitt des Heizdrahts positioniert ist.

15. Multidispenser-Zapfanlage, mit einer Kraftstoffzapfstelle (21) und einer benachbart zur Kraftstoffzapfstelle (21) angeordneten Anordnung gemäß einem der Ansprüche 10 bis 14, wobei die Kraftstoffzapfstelle (21) eine Zone 2 gemäß der ATEX-Betriebsrichtlinie 1999/92/EG aufweist, wobei der Zapfschlauch (16) und/oder das Zapfventil (15) in die Zone 2 bewegbar ausgebildet sind, und wobei die Steuereinheit (17) außerhalb einer Zone gemäß der ATEX-Betriebsrichtlinie 1999/92/EG angeordnet ist.

## Claims

1. Assembly comprising a flexible hose (16) for the passage of a medium, and a control unit (17) for outputting electric power, wherein the hose (16) has an inlet (41), an outlet (42) and a hose wall, into which a heating wire (27, 28) routed along an axial direction of the hose (16) is embedded, wherein the control unit (17) is configured to output electric power to the heating wire (27, 28) in order to heat an outer surface of the hose (16) and/or a medium conveyed through the hose (16), **characterized in that** the assembly is furthermore designed to determine a power value taking into account a length of the hose (16) and to output a corresponding power to the heating wire (27, 28).

2. Assembly according to Claim 1, in which the heating wire (27, 28) has two wire sections (27, 28), which run along the axial direction of the hose, which are connected to the control unit (17) on the inlet side, and which are passed out of the hose (16) to the outside on the outlet side and are short-circuited to one another outside the hose (16).

3. Assembly according to Claim 1 or 2, which is furthermore designed to access a database (34), in which power values for different lengths of the hose (16) are stored, in order to determine the power value, and/or in which assembly the control unit (17) has an input device (36) for presetting a length of the dispensing hose (16) .

4. Assembly according to any of Claims 1 to 3, which furthermore has a temperature sensor (19) for determining an ambient temperature, wherein a signal output of the temperature sensor (19) is connected to the control unit (17), wherein the control unit is configured to determine a power value, taking into account the ambient temperature, and to output a corresponding power to the heating wire (27, 28), wherein the control unit (17) is preferably designed to access a database (34), in which power values for different ambient temperatures are stored, in order to determine the power value.

5. Assembly according to any of Claims 1 to 4, in which the control unit (17) has a safety module (35), which is designed to measure at least one actual electrical variable of the heating wire (27, 28), to determine a deviation between the measured actual variable and a predetermined setpoint variable, and to switch off the power output to the heating wire (27, 28) if the actual variable deviates from the setpoint variable, wherein the actual electrical variable is, as a further preference, a current flowing through the heating wire (27, 28) and/or a voltage applied to the heating wire (27, 28) and/or a fault current flowing from the heating wire (27, 28) to a ground system (37), wherein the safety module (35) is preferably designed to access a correlation table, in which respectively associated setpoint variables are stored for different total lengths of the hose (16) and optionally for different ambient temperatures, in order to determine the setpoint variable.

6. Assembly according to any of Claims 1 to 5, in which the control unit (17) has a power output module (33) and a safety module (35), wherein the power output module (33) and the safety module (35) are designed to exchange check signals, wherein the power output module (33) and/or the safety module (35) are/is designed to switch off the power output to the heating wire if no check signal is received within a predetermined period of time, wherein the control unit (17) is preferably connected to a supply network and is galvanically isolated from the supply network.

7. Assembly according to either of Claims 5 or 6, in which the safety module (35) has at least one of the following features:
- the safety module (35) is configured to determine a supply voltage supplied to the control unit (17) by a supply network and to switch off the power output to the heating wire in the event of a deviation of the determined supply voltage from a setpoint value or a setpoint value range and/or
- the safety module (35) is configured to monitor a temperature value determined by a temperature sensor (19) in order to determine an ambient temperature of the dispensing system (13, 13`), and to switch off the power output to the heating wire if the temperature value is outside a predetermined temperature range and/or
- the safety module (35) has a normal mode, in which a power output to the heating wire is possible, and a fault mode, in which the power output is blocked, wherein the safety module (35) and/or the control unit are/is designed to switch the safety module from the normal mode to the fault mode after a safety shutdown, wherein the safety module (35) preferably has a manual reset device for resetting the safety module from the fault mode to the normal mode.

8. Assembly according to any of Claims 1 to 7, which furthermore has a conveying signal transmitter, which is designed to detect a conveying process and to output a conveying signal to the control unit (17), wherein the control unit (17) is designed to determine the power value when the conveying signal is received, and to output the corresponding power to the heating wire (27, 28).

9. Assembly according to any of Claims 1 to 8, in which the hose (16) has an inner hose (47), which carries the medium, and an outer hose (44), which surrounds the inner hose (47), wherein the outer hose (44) comprises the hose wall into which the heating wire (27, 28) is embedded, wherein the medium preferably is a compressed and/or liquefied gas, wherein the inner hose (47) is, as a further preference, designed as a corrugated metal hose.

10. Assembly according to any of Claims 1 to 9, furthermore comprising:
- a conveying device for the medium, and
- a dispensing valve (15) for dispensing the medium, wherein the hose (16) connects the conveying device to the dispensing valve (15), wherein the assembly is designed as a dispensing system (13, 13') for delivering the medium to a vehicle tank, wherein the medium is an operating fluid, in particular an aqueous urea solution or a compressed and/or liquefied gas, wherein the hose is a flexible dispensing hose (16), which allows the dispensing valve (15) to be positioned on a filler neck of the vehicle tank or on an operating fluid container.

11. Assembly according to Claim 10, in which the dispensing hose (16) and the dispensing valve (15) are configured to be operated in a zone 2 according to ATEX Workplace Directive 1999/92/EC, and wherein the dispensing system (13, 13') furthermore has an installation space which is designed to be zone-free and in which the control unit (17) is positioned.

12. Assembly according to Claim 11, which further has a housing (14, 14'), wherein the installation space is arranged within the housing.

13. Assembly according to any of Claims 10 to 12, in which the operating fluid is a compressed and/or liquefied gas, wherein the assembly further has an atmospheric humidity sensor connected to the control unit (17) and/or a temperature sensor (19), wherein the control unit is designed to take into account a measured temperature and/or a measured atmospheric humidity when determining the power value output to the heating wire.

14. Assembly according to any of Claims 10 to 13, which furthermore comprises a thermal fuse that is in thermal contact with the heating wire and is configured to interrupt a current flow through the heating wire if a temperature of the thermal fuse exceeds a limit value, wherein the thermal fuse is preferably located in a region outside a zone 0 according to ATEX Workplace Directive 1999/92/EC, and wherein the thermal fuse is, as a further preference, positioned on a section of the heating wire that is passed out of the dispensing hose on the conveying device side.

15. Multi-dispenser dispensing system, having a fuel dispensing point (21) and an assembly according to any of Claims 10 to 14 arranged next to the fuel dispensing point (21), wherein the fuel dispensing point (21) has a zone 2 according to ATEX Workplace Directive 1999/92/EC, wherein the dispensing hose (16) and/or the dispensing valve (15) are/is designed to be movable into zone 2, and wherein the control unit (17) is arranged outside a zone according to ATEX Workplace Directive 1999/92/EC.

## Revendications

1. Ensemble comprenant un tuyau flexible (16) destiné à faire passer un milieu et une unité de commande (17) destinée à délivrer de l'énergie électrique, le tuyau (16) comportant une entrée (41), une sortie (42) et une paroi de tuyau dans laquelle est noyé un fil chauffant (27, 28) guidé suivant une direction axiale du tuyau (16), l'unité de commande (17) étant conçue pour fournir de l'énergie électrique au fil chauffant (27, 28) afin de chauffer une surface extérieure du tuyau (16) et/ou un milieu transporté à travers le tuyau (16),
**caractérisé en ce que**
l'ensemble est en outre conçu pour déterminer une valeur de puissance en tenant compte de la longueur du tuyau (16) et pour délivrer une puissance correspondante au fil chauffant (27, 28).

2. Ensemble selon la revendication 1, dans lequel le fil chauffant (27, 28) comporte deux portions de fil (27, 28) qui s'étendent suivant la direction axiale du tuyau, qui sont reliées du côté entrée à l'unité de commande (17) et qui sortent du tuyau (16) du côté sortie vers l'extérieur et sont court-circuitées ensemble à l'extérieur du tuyau (16).

3. Ensemble selon la revendication 1 ou 2, qui est en outre conçu, afin de déterminer la valeur de puissance, pour accéder à une base de données (34), dans laquelle sont stockées des valeurs de puissance pour différentes longueurs du tuyau (16) et/ou dans lequel l'unité de commande (17) comporte un dispositif d'entrée (36) destiné à prérégler la longueur du tuyau de distribution (16).

4. Ensemble selon l'une des revendications 1 à 3, qui comporte en outre un capteur de température (19) destiné à déterminer une température ambiante, une sortie de signal du capteur de température (19) étant reliée à l'unité de commande (17), l'unité de commande étant conçue pour déterminer une valeur de puissance en prenant en compte la température ambiante et pour délivrer une puissance correspondante au fil chauffant (27, 28), l'unité de commande (17) étant de préférence conçue, afin de déterminer la valeur de puissance, pour accéder à une base de données (34) dans laquelle sont stockées des valeurs de performances pour différentes températures ambiantes.

5. Ensemble selon l'une des revendications 1 à 4, dans lequel l'unité de commande (17) comporte un module de sécurité (35) qui est conçu pour mesurer au moins une grandeur électrique réelle du fil chauffant (27, 28), pour déterminer un écart entre la grandeur réelle mesurée et une grandeur cible prédéterminée et pour couper la puissance délivrée au fil chauffant (27, 28) si la grandeur réelle s'écarte de la grandeur cible, la grandeur électrique réelle étant en outre de préférence un courant circulant à travers le fil chauffant (27, 28) et/ou une tension appliquée au fil chauffant (27, 28) et/ou un courant de fuite circulant du fil chauffant (27, 28) à une mise à la terre (37), le module de sécurité (35) étant de préférence conçu, afin déterminer la grandeur cible, pour accéder à une table de corrélation dans laquelle sont stockées des grandeurs cibles respectivement associées à différentes longueurs totales du tuyau (16) et éventuellement pour différentes températures ambiantes.

6. Ensemble selon l'une des revendications 1 à 5, dans lequel l'unité de commande (17) comporte un module de sortie de puissance (33) et un module de sécurité (35), le module de sortie de puissance (33) et le module de sécurité (35) étant conçus pour échanger des signaux de commande, le module de sortie de puissance (33) et/ou le module de sécurité (35) étant conçus pour couper la sortie de puissance vers le fil chauffant si aucun signal de commande n'est reçu dans un laps de temps prédéterminé, l'unité de commande (17) étant de préférence reliée à un réseau d'alimentation et étant isolée galvaniquement du réseau d'alimentation.

7. Ensemble selon l'une des revendications 5 ou 6, dans lequel le module de sécurité (35) présente au moins une des caractéristiques suivantes :
- le module de sécurité (35) est conçu pour déterminer une tension d'alimentation fournie par un réseau d'alimentation à l'unité de commande (17) et pour couper la puissance de sortie vers le fil chauffant si la tension d'alimentation déterminée s'écarte d'une valeur de consigne ou d'une gamme de valeurs de consigne et/ou
- le module de sécurité (35) est conçu pour surveiller une valeur de température déterminée par un capteur de température (19) destiné à déterminer une température ambiante du système de distribution (13, 13') et pour couper la puissance de sortie vers le fil chauffant si la valeur de température est située à l'extérieur d'une gamme de températures spécifiée et/ou
- le module de sécurité (35) présente un mode normal dans lequel la sortie de puissance vers le fil chauffant est possible et un mode d'erreur dans lequel la sortie de puissance est bloquée, le module de sécurité (35) et/ou l'unité de commande étant conçus pour faire passer le module de sécurité du mode normal au mode erreur après une coupure de sécurité, le module de sécurité (35) comportant de préférence un dispositif de réinitialisation manuelle destiné à réinitialiser le module de sécurité du mode d'erreur au mode normal.

8. Ensemble selon l'une des revendications 1 à 7, qui comprend en outre un générateur de signaux de transport qui est conçu pour détecter un processus de transport et pour délivrer un signal de transport à l'unité de commande (17), l'unité de commande (17) étant conçue pour déterminer la valeur de puissance à la réception du signal de transport et pour délivrer la puissance correspondante au fil chauffant (27, 28).

9. Ensemble selon l'une des revendications 1 à 8, dans lequel le tuyau (16) comporte un tuyau intérieur (47) transportant le milieu et un tuyau extérieur (44) entourant le tuyau intérieur (47), le tube extérieur (44) comprenant la paroi de tuyau dans laquelle le fil chauffant (27, 28) est noyé, le milieu étant de préférence un gaz comprimé et/ou liquéfié, le tuyau intérieur (47) étant de préférence conçu comme un tuyau ondulé métallique.

10. Ensemble selon l'une des revendications 1 à 9, comprenant en outre:
- un dispositif de transport du milieu, et
- une vanne de distribution (15) destinée à délivrer le milieu,
le tuyau (16) reliant le dispositif de transport à la vanne de distribution (15), l'ensemble étant conçu comme un système de distribution (13, 13') destiné à délivrer le milieu à un réservoir de véhicule, le milieu étant un carburant, en particulier une solution aqueuse d'urée ou un gaz comprimé et/ou liquéfié, le tuyau étant un tuyau de distribution flexible (16) qui permet le positionnement de la vanne de distribution (15) à une tubulure de remplissage du réservoir de véhicule ou à un récipient de carburant.

11. Ensemble selon la revendication 10, dans lequel le tuyau de distribution (16) et la vanne de distribution (15) sont conçus pour fonctionner dans une zone 2 conformément à la directive d'exploitation ATEX 1999/92/CE, et le système de distribution (13, 13') comportant en outre un espace d'installation sans zone dans lequel l'unité de commande (17) est positionnée.

12. Ensemble selon la revendication 11, qui comprend en outre un boîtier (14, 14'), l' espace d'installation étant disposé à l'intérieur du boîtier.

13. Ensemble selon l'une des revendications 10 à 12, dans lequel le carburant est un gaz comprimé et/ou liquéfié, l'ensemble comportant en outre un capteur d'humidité de l'air et/ou un capteur de température (19) reliés à l'unité de commande (17), l'unité de commande étant conçue pour prendre en compte une température mesurée et/ou une humidité de l'air mesurée lors de la détermination de la valeur de puissance délivrée au fil chauffant.

14. Ensemble selon l'une des revendications 10 à 13, qui comporte en outre un fusible thermique qui est en contact thermique avec le fil chauffant et qui est conçu pour interrompre un flux de courant à travers le fil chauffant lorsqu'une température du fusible thermique devient supérieure à une valeur limite, le fusible thermique étant situé de préférence dans une zone à l'extérieur de la zone 0 conformément à la directive d'exploitation ATEX 1999/92/CE et le fusible thermique étant en outre de préférence positionné sur une portion du fil chauffant qui est sortie du tuyau de distribution du côté dispositif de transport.

15. Système de distribution à plusieurs distributeurs, comprenant un point de distribution de carburant (21) et un ensemble selon l'une des revendications 10 à 14 disposé de manière adjacente au point de distribution de carburant (21), le point de distribution de carburant (21) comportant une zone 2 conformément à la directive d'exploitation ATEX 1999/92/CE, le tuyau de distribution (16) et/ou la vanne de distribution (15) étant conçus pour être mobiles jusque dans la zone 2, et l'unité de commande (17) étant disposée à l'extérieur d'une zone conformément à la directive d'exploitation ATEX 1999/92/CE.
